# EUROPEAN PATENT APPLICATION

(11) **EP 2 216 747 A2**
(43) Date of publication of application: **11.08.2010**
(21) Application number: 10001365.5
(22) Date of filing: 10.02.2010
(51) Int. Cl.: G06Q 30/00

(54) **Method and apparatus to associate demographic and geographic information with influential consumer relationships**

(30) Priority: 10.02.2009 US 368818
(71) Applicant: The Nielsen Company (US), LLC, Schaumburg, IL 60173 (US)
(72) Inventor: Besehanic, Jan, Tampa, Florida 33606 (US)
(74) Representative: Samson & Partner

(57) **Abstract**

Example methods and apparatus to associate demographic and geographic information with influential consumer relationships are disclosed. A disclosed example method includes receiving a communication record associated with a panel member, identifying from the communication record an influential relationship between a first individual listed within the communication record and the panel member, and in response to identifying the influential relationship, associating at least one of a geographic location or a demographic profile with the first individual.

## Description

### FIELD OF THE DISCLOSURE

This disclosure relates generally to consumer metering and, more particularly, to methods and apparatus to associate demographic and geographic information with influential consumer relationships.

### BACKGROUND

Influential consumers are individuals who convince family, friends, coworkers, and other people in their social network to purchase products and/or services. Typically, once an influential consumer is convinced about a product and/or service, the influential consumer tries to convince people within his social network of the value of such a product or service. Additionally, influential consumers are the first individuals to try new trends or purchase new products. Because of this, marketers try to reach influential consumers to increase the efficiency or effectiveness of their advertisements.

Currently, marketers and device manufactures use labor intensive methods to locate influential consumers and to determine demographic information and geographic information associated with these influential consumers. Such time-consuming inefficient methods may include questioning focus groups, tracking individual customers, and/or random sampling and questioning of people. Alternatively, many products include registration cards with links to a manufacturer's website for customers to register their recently purchased product, their geographic information, and their demographic information. However, the labor intensive methods and product registration methods tend to yield marginal results because a very small percentage of customers may actually register their products, and/or random sampling may include unrealized biases. As the competition between media device manufactures increases, the difference between a successful product and a marginally successful product may be determined by the accuracy of marketing data and the ability of a manufacturer to design a product more aligned to what the target market desires.

For example, a company that manufactures and sells a cell phone may sell applications for that cell phone via the company website. By focusing advertising for the applications toward influential consumers who have purchased the cell phone, marketers know they are also advertising to individuals associated with the influential consumers. Thus, the company can directly target potential customers who are more likely to purchase cellular phone applications from the company. Targeted marketing to influential consumers may include direct mailings, text messages to likely influential consumers, and/or media advertisements in locations in which influential customers are concentrated.

### BRIEF SUMMARY

The invention relates to a method, an apparatus and a machine-accessible medium to associate demographic and geographic information with influential consumer relationships as defined in the appended claims.

The example methods and apparatus described herein are used to associate demographic and geographic information with influential consumer relationships. In one example, a method includes receiving a communication record associated with a panel member, identifying from the communication record an influential relationship between a first individual listed within the communication record and the panel member, and in response to identifying the influential relationship, associating at least one of a geographic location or a demographic profile with the first individual.

In some examples, at least one of the geographic location or the demographic profile is associated with the first individual by identifying a communication identifier associated with the first individual, accessing geographic information and determining the geographic location for the first individual corresponding to the communication identifier, and accessing demographic information and determining the demographic profile associated with the geographic location. In another example, identifying the influential relationship comprises parsing the communication record by communications initiated by the panel member and communications received by the panel member, counting a first number of communications associated with the panel member initiating communications with the first individual and counting a second number of communications associated with the panel member receiving communications from the first individual, determining if the first number of communications exceeds a first threshold and determining if the second number of communications exceeds a second threshold, if the first number of communications exceeds the first threshold, classifying the panel member as influential with the first individual, and if the second number of communications exceeds the second threshold, classifying the first individual as influential with the panel member.

In some examples, the example method includes determining if the influential relationship between the panel member and the first individual is similar to an influential relationship between a first set of individuals and a second set of individuals, if the influential relationship is similar, adding the panel member to the first set of individuals and adding the first individual to the second set of individuals, and if the influential relationship is not similar, creating a third set of individuals including the panel member and creating a fourth set of individuals including the first individual. In some examples, determining if the influential relationship between the panel member and the first individual is similar to an influential relationship between the first set of individuals and the second set of individuals comprises matching at least one of the demographic profile or the geographic location associated with the panel member to the first set of individuals, matching at least one of the demographic profile or the geographic location associated with the first individual to the second set of individuals, and matching the influential relationship between the panel member and the first individual to the influential relationship between the first set of individuals and the second set of individuals.

Additionally, the example method may include if the influential relationship between the panel member and the first individual is similar to an influential relationship between the first set of individuals and the second set of individuals, generating a report showing the influential relationship between the first set of individuals including the panel member and the second set of individuals including the first individual. Further, the example method may include identifying from the communication record a second influential relationship between a second individual listed within the communication record and the panel member, in response to identifying the second influential relationship, associating at least one of the geographic location or the demographic profile with the second individual, determining if the second influential relationship between the panel member and the second individual is similar to an influential relationship between a fifth set of individuals and a sixth set of individuals, if the second influential relationship is similar, adding the panel member to the fifth set of individuals and adding the second individual to the sixth set of individuals, and if the second influential relationship is not similar, creating a seventh set of individuals including the panel member and creating a eighth set of individuals including the first individual.

In some examples, the example method may include if the second influential relationship between the panel member and the second individual is similar, generating a report showing the second influential relationship between the fifth set of individuals including the panel member and the sixth set of individuals including the second individual. In some examples, the communication record is at least one of a phone bill, a text messaging bill, a media device usage information record, a record of e-mails, a text messaging log, or a media device usage history log. In other examples, the communication record includes at least one of a listing of communications initiated by the panel member to one or more individuals or a listing of communications received by the panel member initiated by one or more individuals. In yet other examples, the communication identifier includes at least one of a phone number, a hardware identification number, a wireless identification number, a name, an e-mail address, an instant messaging username, a short message service identifier, or an account number. In other examples, the demographic profile includes at least one of a race, an age, an income, a disability, a mobility, an educational level, a home ownership, a religion, or an employment status. Also, in some examples, the geographic location includes at least one of an address, a zip code, a city, a street, a neighborhood, a county, a state, a region, or a country.

Furthermore, the example method may include prior to receiving the communication record, registering the panel member with a metering service to receive the communication record and storing at least one of a demographic profile or a geographic location associated with the panel member. The example method may also include determining a communication identifier associated with the panel member, accessing geographic information and determining a second geographic location for the panel member corresponding to the communication identifier, accessing demographic information and determining a second demographic profile associated with the second geographic location, and associating at least one of the second geographic location or the second demographic profile with the panel member.

In another example, an apparatus includes an influence processor to identify from a communication record an influential relationship between a first individual listed within the communication record and a panel member and an address resolver to, in response to identifying the influential relationship, associate at least one of a geographic location or a demographic profile with the first individual. The apparatus may also include a receiver to receive the communication record associated with the panel member. In some examples, the receiver receives the communication record from at least one of a media device associated with the panel member or a service provider providing a communication service to the panel member. In other examples, the receiver is to register the panel member with a metering service to receive the communication record. The example apparatus may also include a panel member database to store at least one of a demographic profile or a geographic location associated with the panel member.

In some examples, the address resolver is to identify a communication identifier associated with the first individual, access geographic information and determine the geographic location for the first individual corresponding to the communication identifier, and access demographic information and determine the demographic profile associated with the geographic location. In other examples, the influence processor is to identify the influential relationship by parsing the communication record by communications initiated by the panel member and communications received by the panel member, counting a first number of communications associated with the panel member initiating communications with the first individual and counting a second number of communications associated with the panel member receiving communications from the first individual, determining if the first number of communications exceeds a first threshold and determining if the second number of communications exceeds a second threshold, if the first number of communications exceeds the first threshold, classifying the panel member as influential with the first individual, and if the second number of communications exceeds the second threshold, classifying the first individual as influential with the panel member.

In some examples, the apparatus may include a report generator to determine if the influential relationship between the panel member and the first individual is similar to an influential relationship between a first set of individuals and a second set of individuals, if the influential relationship is similar, add the panel member to the first set of individuals and add the first individual to the second set of individuals, and if the influential relationship is not similar, create a third set of individuals including the panel member and create a fourth set of individuals including the first individual. In some examples, the report generator is to determine if the influential relationship between the panel member and the first individual is similar to an influential relationship between the first set of individuals and the second set of individuals by matching at least one of the demographic profile or the geographic location associated with the panel member to the first set of individuals, matching at least one of the demographic profile or the geographic location associated with the first individual to the second set of individuals, and matching the influential relationship between the panel member and the first individual to the influential relationship between the first set of individuals and the second set of individuals. In some examples, the influential relationship between the panel member and the first individual is similar to an influential relationship between the first set of individuals and the second set of individuals, the report generator generates a report showing the influential relationship between the first set of individuals including the panel member and the second set of individuals including the first individual.

The example apparatus may also include a relationship database to store at least one of the geographic location associated with the first individual, the demographic profile associated with the first individual, or the influential relationship between the panel member and the first individual. In some examples, the communication record is at least one of a phone bill, a text messaging bill, a media device usage information record, a record of e-mails, a text messaging log, or a media device usage history log. Additionally, in some examples, the address resolver is to determine a communication identifier associated with the panel member, access geographic information and determining a second geographic location associated with the panel member corresponding to the communication identifier, access demographic information and determining a second demographic profile associated with the geographic location, and associate at least one of the second geographic location or the second demographic profile with the panel member.

Further, the example apparatus may include a demographic database to store demographic profiles by geographic location and a geographic database to store geographic locations by communication identifiers. In some examples, the demographic profiles include at least one of a race, an ethnicity, an education level, an adjusted gross income per household, a number of members per household, a gender, or a population. In other examples, geographic locations include at least one of an address, a zip code, a city, a street, a neighborhood, a county, a state, a region, or a country. In yet other examples, the communication identifier includes at least one of a phone number, a hardware identification number, a wireless identification number, a name, an e-mail address, an instant messaging username, a short message service identifier, or an account number.

An example machine accessible medium is described, which includes machine readable instructions to receive a communication record associated with a panel member, identify from the communication record an influential relationship between a first individual listed within the communication record and the panel member, and in response to identifying the influential relationship, associate at least one of a geographic location or a demographic profile with the first individual. In some examples, the instructions further cause the machine to identify a communication identifier associated with the first individual, access geographic information and determine the geographic location for the first individual corresponding to the communication identifier, and access demographic information and determining the demographic profile associated with the geographic location.

In some examples, the instructions further cause the machine to identify the influential relationship by parsing the communication record by communications initiated by the panel member and communications received by the panel member, counting a first number of communications associated with the panel member initiating communications with the first individual and counting a second number of communications associated with the panel member receiving communications from the first individual, determining if the first number of communications exceeds a first threshold and determining if the second number of communications exceeds a second threshold, if the first number of communications exceeds the first threshold, classifying the panel member as influential with the first individual, and if the second number of communications exceeds the second threshold, classifying the first individual as influential with the panel member. In some examples, the instructions further cause the machine to determine if the influential relationship between the panel member and the first individual is similar to an influential relationship between a first set of individuals and a second set of individuals, if the influential relationship is similar, add the panel member to the first set of individuals and add the first individual to the second set of individuals, and if the influential relationship is not similar, create a third set of individuals including the panel member and create a fourth set of individuals including the first individual. Additionally, the instructions may further cause the machine to match at least one of the demographic profile or the geographic location associated with the panel member to the first set of individuals, match at least one of the demographic profile or the geographic location associated with the first individual to the second set of individuals, and match the influential relationship between the panel member and the first individual to the influential relationship between the first set of individuals and the second set of individuals.

Furthermore, the instructions may further cause the machine to if the influential relationship between the panel member and the first individual is similar to an influential relationship between the first set of individuals and the second set of individuals, generate a report showing the influential relationship between the first set of individuals including the panel member and the second set of individuals including the first individual. Also, in some examples, the instructions further cause the machine to identify from the communication record a second influential relationship between a second individual listed within the communication record and the panel member, in response to identifying the second influential relationship, associate at least one of the geographic location or the demographic profile with the second individual, determine if the second influential relationship between the panel member and the second individual is similar to an influential relationship between a fifth set of individuals and a sixth set of individuals, if the second influential relationship is similar, add the panel member to the fifth set of individuals and add the second individual to the sixth set of individuals, and if the second influential relationship is not similar, create a seventh set of individuals including the panel member and create a eighth set of individuals including the first individual.

In some examples, the instructions may further cause the machine to if the second influential relationship between the panel member and the second individual is similar, generate a report showing the second influential relationship between the fifth set of individuals including the panel member and the sixth set of individuals including the second individual. Furthermore, the instructions may also cause the machine to register the panel member with a metering service and store at least one of a demographic profile or a geographic location associated with the panel member. In other examples, the instructions may further cause the machine to determine a communication identifier associated with the panel member, access geographic information and determine a second geographic location for the panel member corresponding to the communication identifier, access demographic information and determine a second demographic profile associated with the second geographic location, and associate at least one of the second geographic location or the second demographic profile with the panel member.

### BRIEF DESCRIPTION OF THE DRAWINGS

FIG. 1 is a diagram of example consumer relationships.
FIG. 2 is a schematic diagram showing an example network system including an example collection system.
FIG. 3 shows an example implementation of the example collection system of FIG. 2.
FIG. 4 shows an example communication record for the panel member of FIG. 1.
FIG. 5 shows a table summarizing communications from the example communication record of FIG. 4.
FIG. 6 shows a diagram of influential consumer relationships determined from the table of FIG. 5.
FIG. 7 shows a table of example geographic locations associated with influential individuals from the table of FIG. 5.
FIG. 8 shows a table of example demographic profiles associated with the geographic locations from the table of FIG. 7.
FIG. 9 shows an example report of influential consumer relationships between a plurality of demographic profiles and geographic regions.
FIG. 10 shows an example report of a plurality of demographic profiles and geographic locations influenced by a single demographic profile from a particular geographic location.
FIGS. 11, 12, 13, 14, 15 and 16 are flowcharts representative of example methods that may be performed by, for example, a processor to implement any portion or all of the example collection system of FIG. 3.
FIG. 17 is a block diagram of an example processor system that may be used to implement the example methods and apparatus described herein.

### DETAILED DESCRIPTION

The example methods and apparatus described herein are used to associate demographic and geographic information with influential consumer relationships. An example method includes receiving a communication record associated with a panel member, identifying from the communication record an influential relationship between a first individual listed within the communication record and the panel member and, in response to identifying the influential relationship, associating at least one of a geographic location or a demographic profile with the first individual.

An example apparatus includes an influence processor to identify from a communication record an influential relationship between a first individual listed within the communication record and a panel member. The example method also includes an address resolver to, in response to identifying the influential relationship, associate at least one of a geographic location or a demographic profile with the first individual.

Influential consumers are individuals who convince family, friends, coworkers, and other people in their social network to purchase products and/or services. Typically, once an influential consumer is convinced about a product and/or service, the influential consumer tries to convince people within his social network of the value of such a product and/or service. Additionally, influential consumers are the first individuals to try new trends or purchase new products. Because of this, marketers try to reach influential consumers to increase the efficiency or effectiveness of their advertisements.

Currently, marketers and device manufactures use labor intensive methods to locate influential consumers and to determine demographic information and geographic information associated with influential consumers. These time-consuming inefficient methods may include questioning focus groups, tracking individual customers, and/or random sampling and questioning of people. Alternatively, many products include registration cards with links to a manufacturer's website for customers to register their recently purchased product, their geographic information, and their demographic information. However, these labor intensive methods and product registration methods tend to yield marginal results because a very small percentage of customers may actually register their products, and/or random sampling may include hidden biases. As the competition between media device manufactures increases, the difference between a successful product and a marginally successful product may be determined by the accuracy of marketing data and the ability of a manufacturer to design a product more aligned to what the target market desires.

The example methods described herein associate demographic and geographic information with influential consumer relationships by identifying influential consumers, associating geographic locations with each of the influential consumers, and associating demographic profiles with each of the influential consumers based on their geographic location.

The example methods identify influential consumer relationships from communications received from and/or initiated by one or more panel members. The panel members communicate with individuals who may or may not be part of their social network. The more times a panel member is in communication with an individual, the greater the probability the panel member and the individual have a relationship. Additionally, the influence between the panel member and the individual may be inferred from the number of communications, quality of communications, and the duration of the communications between the panel member and the individual.

A panel member may register to have his communications with individuals metered by a metering service. The panel member may register one or more media devices and/or communication services. By registering, the metering service receives communication records associated with communications to and/or from the panel member. The communication record may include a phone bill, a text messaging bill, a media device usage information record, a record of e-mails, a text messaging log, a media device usage history log, etc.

The metering service may analyze the communication record to determine which individuals contact the panel member the most and/or which individuals the panel member contacts the most. If the number of communications between the panel member and any one individual exceeds a predefined threshold, the individual and the panel member may be classified as being in an influential relationship. An influential relationship where the panel member contacts an individual may be classified as the panel member being influential with the individual. In a similar manner, an influential relationship where the panel member is contacted by an individual may be classified as the individual being influential with the panel member.

Upon identifying individuals in an influential relationship with the panel member, the example methods described herein determine a communication identifier associated with the individuals. The communication identifier may include a phone number, a hardware identification number, a wireless identification number, a name, an e-mail address, an instant messaging username, a short message service identifier, and/or an account number. Using the communication identifier, the example methods access a geographic database and determine a geographic location associated with the communication identifier. For example, if the communication identifier is a phone number, the example methods use the area code to narrow the geographic location to a region, the middle three digits to narrow the geographic location to a town and/or a neighborhood, and the last four digits of the telephone number to narrow the geographic location to a street address. In other examples, the geographic database may include a geo-Internet Protocol (IP) address lookup table for determining a geographic location based on an IP address communication identifier.

Upon associating a geographic location with each of the individuals in an influential relationship, the example methods described herein associate a demographic profile with the influential individuals. The example methods may use a demographic database that cross-references demographic data with geographic locations. By determining the geographic location of an influential individual, the example methods may look up a demographic profile associated with the geographic location and associate that demographic profile with the influential individual.

The demographic profile information may include race, ethnicity, education level, adjusted gross income per household, number of members per household, gender, population, income, disability, mobility, educational level, home ownership, religion, employment status, and/or any other demographic composition information. Associating the demographic profile with the individual may include linking the demographic information to an electronic record including the media device. Additionally, associating may include linking a reference code corresponding to a typical demographic profile to an identifier of the media device. The profile may include a complete demographic composition for a geographic location and/or a most likely demographic composition for the geographic location. For example, the demographic profile for a location may include the top three demographics by percentage in the location and demographic distributions such as education level and income.

The example methods described herein may compile data for a plurality of influential individuals and/or panel members across the world. This enables the indiscriminate, unbiased collection of data from random samples for any geographic location with minimal labor. The example methods further include processing the collected data and compiling the collected communication records into useful statistics and influential consumer relationship information for device manufacturers, marketing entities, application developers, and/or any other third party or entity that may be interested in the demographics associated with influential consumers. These entities may use the information for targeted marketing, product improvements, and/or planning future products.

For example, compiled statistics may show that a first group is very influential with a second group. The first group may comprise White and Asian women from the ages of 23-32 in the 60607 and 60606 zip codes and the second group may comprise White and Asian women ages of 54-62 from the 60047 and the 60074 zip codes. As a result of this influential relationship, marketers and/or product manufactures that are targeting individuals from the second group may target individuals from the first group knowing these consumers have an influential relationship with the target demographic in the second group. As a result of this influential relationship, the individuals from the first group would be more likely to convince the second group to purchase the product and/or service.

In another example, compiled statistics may show that White men ages of 25-35 living in the city of Tampa are very influential with numerous groups of individuals from different areas of the United States. Marketers and/or product manufactures attempting to advertise a product and/or service to the general public may target 25-35 year old males living in Tampa knowing these individuals are more likely to influence many other groups of consumers in other parts of the country. As a result of focusing their efforts on 25-35 year old males living in Tampa, marketers may achieve more reach per dollar spent than by advertising nationally to the general population.

Although the following discloses example apparatus including, among other components, software executed on hardware, it should be noted that such systems are merely illustrative and should not be considered as limiting. For example, it is contemplated that any or all of the disclosed hardware and software components could be embodied exclusively in dedicated hardware, exclusively in software, exclusively in firmware or in some combination of hardware, firmware, and/or software.

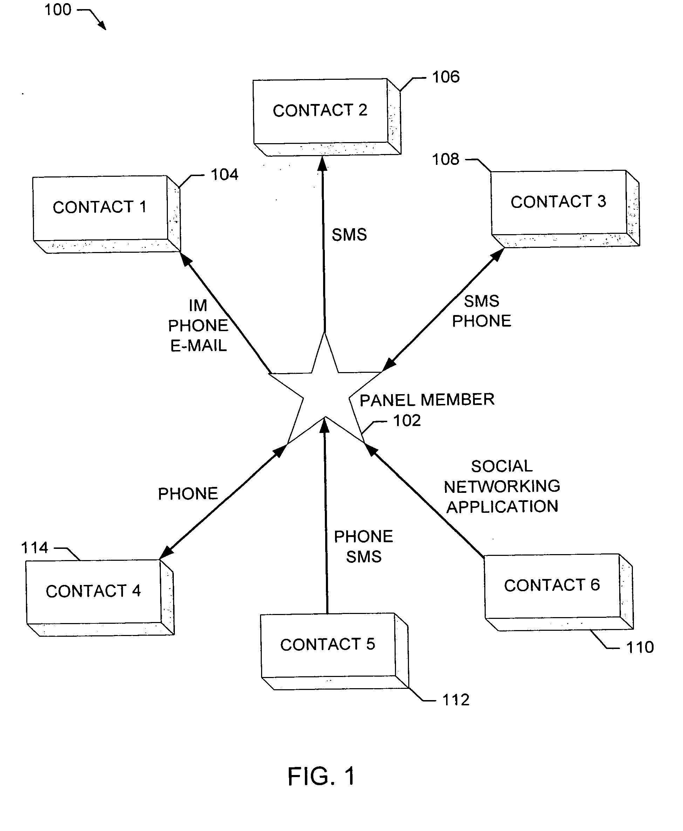

FIG. 1 shows a diagram of example consumer relationships 100. The consumer relationships 100 include a panel member 102 with relationship links to contacts 104-114.
In other example implementations the panel member 102 may have additional contacts or fewer contacts. In yet other example implementations, the example consumer relationships 100 may include relationship links between the contacts. Furthermore, while FIG. 1 shows only the single panel member 102, the consumer relationships 100 may include additional branching from the panel member 102 and/or the contacts 104-114 to other panel members and/or other contacts.

The example panel member 102 is an individual that registers with a metering service.
While the example panel member 102 is registered with a metering service, the contacts 104-114 are not registered with the metering service. Registering enables the metering service to receive communication records from a media device used by the panel member and/or from communication records generated by one or more service providers. The service providers are entities that provide a networked service used by the panel member.

The example panel member 102 may register with a metering service by responding to an invitation to participate in the metering of communications and/or communication records. Additionally, the panel member 102 may register unsolicited with the metering service through an agent and/or website of the metering service. Furthermore, the panel member 102 may register their geographic location and/or demographic profile with the metering service. In other example implementations, the panel member 102 may not register a geographic location or a demographic profile. In this case, the geographic location and/or the demographic profile corresponding to the panel member 102 may be determined from a communication identifier associated with the panel member 102 and/or a media device registered by the panel member 102.

A communication record may include a phone bill, a text messaging bill, a media device usage information record, a record of e-mails, a text messaging log, and/or a media device usage history log. Furthermore, a communication record may include an initiator of the communication, (e.g., the panel member 102 and/or the contact 104-114), a type of communication (e.g., short message service (SMS), phone, IM, etc.), a duration of the communication, a website or service provider of the communication, a time and date of the communication, a bandwidth of the communication, a content of the communication, and/or any other communication information. The metering service may use any of the information within the communication record to determine if there is an influential consumer relationship between the panel member 102 and any of the contacts 104-114.

For example, 20 phone calls initiated by the panel member 102 to the contact 108 during of a month, with each call having an average duration of 12 minutes, and each call including the mention of a particular brand of boots may indicate the panel member 102 is influential with the contact 108. In another example, if the panel member 102 calls the contact 104 once to twice a month with each phone call having a duration of 6 minutes, the panel member 102 may not be influential with the contact 104.

The example contacts 104-114 are individuals in communication with the panel member 102. In a communication record, the contacts 104-114 are listed as individuals contacted by the panel member 102 and/or individuals that contacted the panel member 102. In the communication record, the contacts 104-114 are identified by communication identifiers. The contacts 104-114 may include individuals from any geographic location and/or with any demographic profile.

The example consumer relationships 100 of FIG. 1 include the general direction of communications initiated and received by the panel member 102. The arrows linking the panel member 102 with the contacts 104-114 show the direction of the majority of the communications. The text next to the arrows indicates the type of communications.

For example, the example panel member 102 of FIG. 1 usually initiates communications with the contact 104 via instant messaging (IM), phoning, and e-mail. Likewise, the panel member 102 initiates communication with the contact 106 via SMS (e.g., text messaging). Consumer relationships with the majority of the communications originating from the panel member 102 indicate the panel member 102 is sociable. If the number of communications between the panel member 102 and one or more of the contacts 104 and 106 exceeds predefined thresholds, the relationship may be classified as an influential relationship with the panel member 102 being influential with the respective contacts 104 and 106. In other words, the panel member 102 may influence the decisions, feelings, attitudes, and/or purchasing habits of the contacts 104 and 106.

Similarly, the example consumer relationships 100 of FIG. 1 with the majority of the communications originating from a contact indicate the panel member 102 is popular. In the example of FIG. 1, the panel member 102 is popular with the contacts 110 and 112. The contact 110 communicates with the panel member 102 via a social networking application (e.g., Facebook^{™}) while the contact 112 communicates with the panel member 102 via SMS and phoning. If the number of communications between the panel member 102 and one or more of the contacts 110 and 112 exceeds predefined thresholds, the relationship may be classified as an influential relationship with the respective contacts 110 and 112 being influential with the panel member 102. In other words, the contacts 110 and 112 may influence the decisions, feelings, attitudes, and/or purchasing habits of the panel member 102.

Additionally, consumer relationships with a bi-directional arrow linking the panel member 102 and the contacts 108 and 114 indicates there is approximately an equal amount of communication initiated by the panel member 102 and the respective contacts 108 and 114. In this case, the panel member 102 may be classified as both sociable and popular with respect to the contacts 108 and 114. The contact 108 and the panel member 102 communicate with each other via SMS and phoning while the contact 114 and the panel member 102 communicate with each other via phoning. If the number of communications between the panel member 102 and one or more of the contacts 108 and 114 exceeds predefined thresholds, the relationship may be classified as an influential relationship. If the number of communications between the panel member 102 and the contacts 108 and 114 exceeds predefined thresholds in both directions, the panel member 102 may be influential with the contacts 108 and 114 and may also be influenced by the contacts 108 and 114. In other words, the panel member 102 and the contacts 108 and 114 may influence the decisions, feelings, attitudes, and/or purchasing habits of each other.

The predefined thresholds associated with the number of communications needed to establish the existence of an influential relationship may be specified by the metering service determining influential consumers. The thresholds may be determined from any statistical metrics or formulas for calculating the number of communications and/or durations of communications necessary to classify a relationship as an influential consumer relationship. In other example implementations, the thresholds may be determined by studying a sample of individuals to identify patterns indicating an influential consumer relationship.

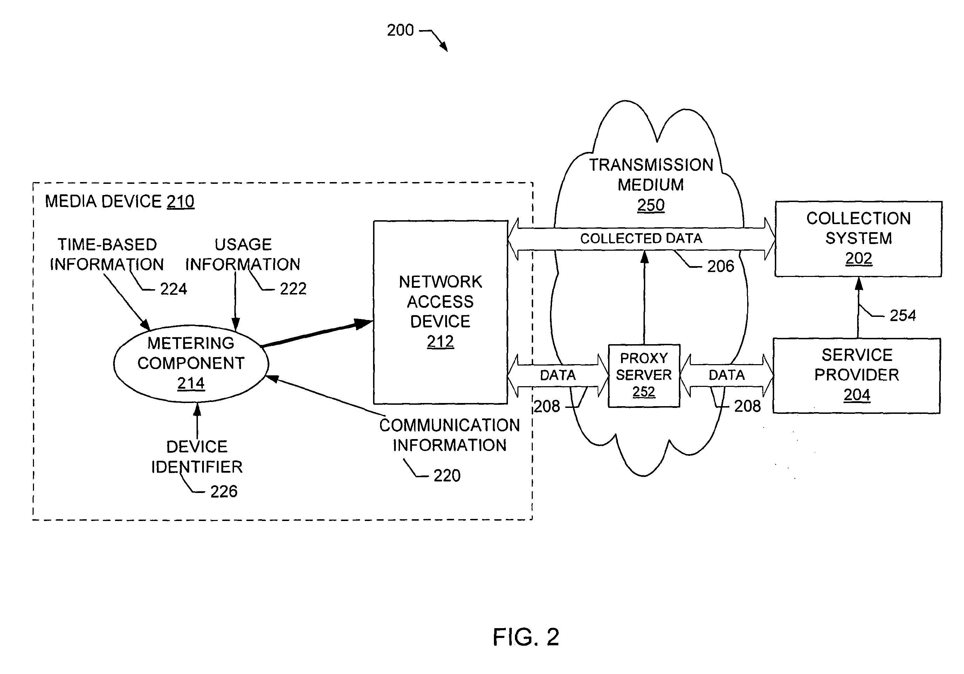

An example network system 200 is shown in FIG. 2. The example network system 200 includes a collection system 202, a service provider 204, a transmission medium 250, and a media device 210. The network system 200 provides a framework for the collection system 202 associated with a metering service to receive communication records associated with the panel member 102 of FIG. 1. The example collection system 202 of FIG. 2 receives communication records and corresponding information from the media device 210, the service provider 204, and/or other media devices connected to the transmission medium 250. For brevity, only one media device 210 and one service provider 204 are shown. However, the example network 200 may include a plurality of media devices 210 connected through the transmission medium 250 (e.g., the Internet) to one or more service providers 204. The transmission medium 250 provides a framework for the media device 210 to access servers, the service providers 204, and other media devices connected to the Internet.

The media device 210 of FIG. 1 includes a metering component 214 and a network access device 212. Additionally, the media device 210 includes any number of integrated circuits, microcontrollers, processors, wireless chips, power supplies, signal processing circuits, noise filtering circuits, video drivers, sound cards, displays, antennas, input/output ports, and/or any other hardware component for displaying and playing media. For brevity, these hardware components are not shown in the media device 210. Furthermore, the media device 210 may include executable software, code, instructions, etc. stored on a computer readable medium for processing and displaying media received from media sources. The media device 210 may be any type of media device including a cellular phone, a laptop, a personal digital assistant (PDA), an audio player, a portable video player, a gaming machine, a personal computer, a cable receiver, a satellite receiver, and/or any other media device that can connect to the Internet and/or communicate with another individual.

In the example shown in FIG. 2, the media device 210 may be in the possession of and/or belong to the panel member 102 of FIG. 1. Additionally, the media device 210 of FIG. 2 may be shared between a plurality of panel members. Furthermore, the panel member 102 may use a plurality of media devices including the media device 210. The media device 210 utilizes the metering component 214 for logging communication information (e.g., types of communications, duration of communications, dates and times of communications) and device usage information. In other example implementations, the media device 210 may store and transmit the communication information in the form of a communication record to the collection system 202 without a metering component 214. In yet other example implementations, the media device 210 may transmit communication information to the collection system 202 upon receiving an instruction from the collection system 202.

The example media device 210 includes a hardware identification number (e.g., a device identifier 226). This number may include a MAC address that is assigned to the media device 210 during its manufacture. The MAC address and/or hardware identification number is a unique number that includes information identifying the make and model of the media device 210. This identification number or device identifier 226 may be transmitted to the collection system 202 upon request and may be included in the communication record sent to the collection system 202. The device identifier 226 enables the collection system 202 to organize communication information by panel member and/or media device. Additionally, the device identifier 226 enables the collection system 202 to determine the make and model of the media device 210.

The metering component 214 within the media device 210 may be activated by the panel member 102 subscribing to and/or registering with a metering service such as, for example, Nielsen Mobile. The collection system 202 may send the metering component 214 to the subscribing panel member 102 to install and/or attach to the media device 210. The metering component 214 may be sent as software over the transmission medium 250 and/or sent within a memory device via the mail. Additionally or alternatively, the metering component 214 may be installed within a hardware component such as, for example, an application specific integrated circuit (ASIC), and/or installed or embedded within an operating system and/or read only memory (ROM) during manufacture of the media device 210. In this example, the panel member 102 registers with the metering service to activate the metering component 214.

In the example network system 200 of FIG. 2, the metering component 214 monitors the media device 210 for communications between the panel member 102 and other individuals (e.g., the contacts 104-114). The communications may include phoning, text messaging (e.g., SMS), instant messaging, e-mail, messages uploaded to a blog, messages sent through a social networking application, and/or any other form of electronic communications.

Additionally, the metering component 214 may store information associated with the communication (e.g., communication information 220) including an initiator of the communications, a type of communications, a duration of the communications, a website or service provider of the communications, a time and date of the communications, a bandwidth of the communications, a content of the communications, and/or any other communication information.

In a similar manner, the example service provider 204 may store communication information associated with communications between the panel member 102 and individuals. Because the service provider 204 provides the communication framework for the panel member 102, the service provider 204 is capable of monitoring and storing communication information. With agreement from the panel member 102, the service provider 204 may transmit a communication record of communications associated with the panel member 102 to the collection system 202.

The example metering component 214 of FIG. 2 may operate in the background of an operating system, applications, and/or hardware of the media device 210. Data gathered by the metering component 214 is sent or communicated to a processor and/or a communication record within the memory of the media device 210. In another example implementation, the metering component 214 sends or communicates the metered data to a personal computer having a processor and memory that processes and stores the data. The personal computer may then transmit the data to the collection system 202 via the transmission medium 250.

The data includes usage information 222 and the communication information 220 for a plurality of time periods. The usage information 222 may include a log of applications and/or hardware functions accessed by a panel member, media device parametric information, and/or network parametric (e.g., quality) information. The data for a time period may be saved to the memory of the media device 210 as part of a communication record cache. The communication record cache accumulates the metered media device communication information 220 and the usage information 222 for a plurality of time periods. The metering component 214 within the media device 210 transmits communication records including the communication information 220 from the media device 210 memory to the collection system 202. The media device 210 may send the communication records and/or communication information when the communication record cache is full, when the collection system 202 sends a request or query to the media device 210, during predetermined times of a day or week, and/or when the media device 210 is in an idle state.

The usage information 222 collected by the metering component 214 includes any data relating to activity on the media device 210 initiated by a panel member. For example, the usage information 222 includes data from data applications, device applications, metadata, and event statistics. Data applications include, for example, Internet browsing, live media applications, mobile commerce transactions, mobile advertising activity, e-mail activity, etc. Device applications include, for example, games, address books, personal information management software, document processing programs, and media players used for streaming audio and video. Metadata includes attributes of device applications, for example, content title, author, date of publication, source and/or publisher information, copyright information, digital rights management information, etc. Event statistics includes, for example, voice and data call activity, text-messaging, instant messaging, etc.

The usage information 222 and the communication information 220 may be coupled to time-based information 224 by the metering component 214. The time-based information 224 includes, for example, the duration of application usage, and calendar data (e.g., month, week, day, hour, minute, second). The time-based information 224 may enable the metering component 214 to follow a schedule of the time periods the metering component 214 is configured to monitor events on the media device 210.

Additionally, the metering component 214 collects any of the device identifiers 226 within the media device 210. The device identifiers 226 may include a brand, a model type, a hardware address, and/or a MAC address of the media device 210. Furthermore, the device identifiers 226 may include an alpha-numeric code provided to the panel member when their media device 210 is registered to a metering service. The collection system 202 may combine the device identifiers 226, the time-based information 224, and/or the communication information 220 as a communication record that is used to associate geographic locations and/or demographic profiles to contacts of the panel member 102.

The network access device 212 connects the media device 210 to the service provider 204 and/or the collection system 202 via the transmission medium 250. The media device 210 transmits communication information to the collection system 202 via a collected data bus 206. The network access device 212 converts the communication information into a transportable format for transmission via the transmission medium 250. The conversion may include compressing the communication information and/or opening a transmission path via the transmission medium 250 to the collection system 202. The network access device 212 may operate on any type of wired and/or wireless network. A wired network may include an Ethernet connection, a digital subscriber line (DSL), a telephone line, coaxial cable, a cellular telephone system, etc. The wireless network may include a circuit switched network, a paging network, and/or packet-based data networks including, but not limited to, AMPS, CDMA, TDMA, GSM, iDEN, GPRS, 3XRTT, 3GSM, LTE, EDGE, WiMax, etc.

The network access device 212 may incorporate and adhere to wireless protocols and standards for data communication services through the transmission medium 250. These standards include TIA/EIA95-B (Mobile Base Station Compatibility for Wideband Spread Spectrum Cellular Systems), ANSI J-STD-008 (Personal Station-Base Station Compatibility Requirements for 1.8 to 2.0 GHz Code Division Multiple Access Personal communication Systems), ANSI J-STD 018 (Minimum Performance Requirements for 1.8 to 2.0 GHz Code Division Multiple Access Personal Stations), TIA/EIA/IS-99 (Data Services Option Standard for Wideband Spread Spectrum Digital Cellular Systems), TIA/EIA-637-A (Short Message Service for Spread Spectrum Systems), TIA/EIA-683-A (Over-the-Air Provisioning of Mobile Stations in Spread Spectrum Systems), and various WAP documents (Wireless Application Protocol Architecture Specification, Wireless Application Environmental Specification, Wireless Telephony Application Specification, Wireless Transaction Protocol Specification, Wireless Datagram Protocol Specification, etc.).

The example network system 200 includes the transmission medium 250 for transporting communication information from the media device 210, proxy server 252, and/or the service provider 204. The transmission medium 250 includes any hardware, software, computer readable medium, and/or physical connections between any media device capable of connecting to the transmission medium 250. For example, the transmission medium 250 may include a transport layer, an IP Multimedia Subsystem (IMS) layer, and an application layer. Within the transport layer, the transmission medium 250 may include digital subscriber line access multiplexers (DSLAMs), wireless local area network (WLAN) gateways, and/or general packet radio service (GPRS) support nodes for connecting a plurality of media devices. Additionally, the transport layer may include gateway GPRS support nodes (GSGNs), media resource function (MRF) servers, broadband access servers (BASs), switches, and/or routers for routing data between the media device 210 and the service provider 204 and/or the collection system 202. The transport layer within the transmission medium 250 may support Internet Protocol version 4 (IPv4), Internet Protocol version 6 (IPv6) and/or any other IP routing standard.

The transmission medium 250 includes the proxy server 252 for storing communication information. The proxy server 252 collects communication information for a plurality of media devices 210 in cases where the media devices 210 do not include a metering component 214 and/or cases where the media devices 210 are not capable of sending communication information to the collection system 202. For example, when the panel member 102 initiates a communication with a contact, the communication initiation is transmitted from the media device 210 via a data connection 208. The proxy server 252 detects the communication initiation and stores a copy of the communication including identification of the panel member 102, identification of the contact, the type of the communication, the date and/or time the of the communication, and/or any additional communication information. Additionally, the proxy server 252 may request the device identifier 226 from the media device 210 to associate the device identifier 226 with the stored communication information. The proxy server 252 may detect communications for a plurality of media devices 210 and store the communication information for each media device and/or for each panel member associated with the media device. The communication information may be stored in a communication record organized by media device, panel member, date, etc.

Additionally, the proxy server 252 may detect Internet usage by the plurality of media devices 210 and store the Internet usage information for each media device 210. The proxy server 252 may then send to the collection system 202 the stored communication information and/or usage information for processing. The proxy server 252 may send communication records and/or communication information periodically to the collection system 202 or, alternatively, upon request of the collection system 202.

The example proxy server 252 of FIG. 2 may be located in proximity to a session border controller within the transmission medium 250. In other example implementations, the proxy server 252 may be included within the service provider 204. Furthermore, the example proxy server 252 is shown in series with the data connection 208. Alternatively, the example proxy server 252 may monitor and/or probe the data connection 208 for communication information and/or Internet usage information.

The example service provider 204 includes any entity that enables one or more media devices 210 to access the Internet, applications, servers, and/or services. The service provider 204 may include some or all of the hardware included within the transmission medium 250 for routing and directing Internet traffic. Additionally, the service provider 204 may include functionality to implement media gateways, signaling gateways and/or gateway controllers. The media gateways, signaling gateways and/or gateway controllers provide connectivity and interoperation between VoIP and other circuit switch-based telephony networks (e.g., such as PSTN and/or pre-3G wireless networks). The service provider 204 may also include media servers to provide ring tones, announcements and/or media mixing for multi-way calling and/or other calling features. Furthermore, the service provider 204 may include DHCP servers for assigning the media device 210 a dynamic or a static IP address.

For media devices 210 that receive service from the service provider 204, the service provider 204 may collect and store communication information and Internet usage information in the same manner as the proxy server 252 and/or the metering component 214. The service provider 204 may send the collection system 202 the communication information, communication records, and/or usage information for a plurality of media devices via a connection 254. The service provider 204 may send the communication information to the collection system 202 at time periods agreed upon by the two entities (i.e., the collection system 202 and the service provider 204) at periodic time periods, and/or upon request by the collection system 202.

The example collection system 202 receives and processes communication information and/or communication records to identify influential contacts of the panel member 102. Additionally, the collection system 202 associates the identified influential contacts (e.g., consumers) with respective geographic locations and/or demographic profiles (e.g., demographic compositions). The collection system 202 may be operated by a metering entity that generates reports associating influential individuals with demographic profiles and/or geographic locations. The collection system 202 receives the communication information and/or media device usage information from one or more media devices 210, proxy servers 252, and/or service providers 204. The collection system 202 receives the communication information via the connection 254 and the collected data bus 206. The transmitted communication information may be encrypted to secure the identity and personal information of users of the media devices 210.

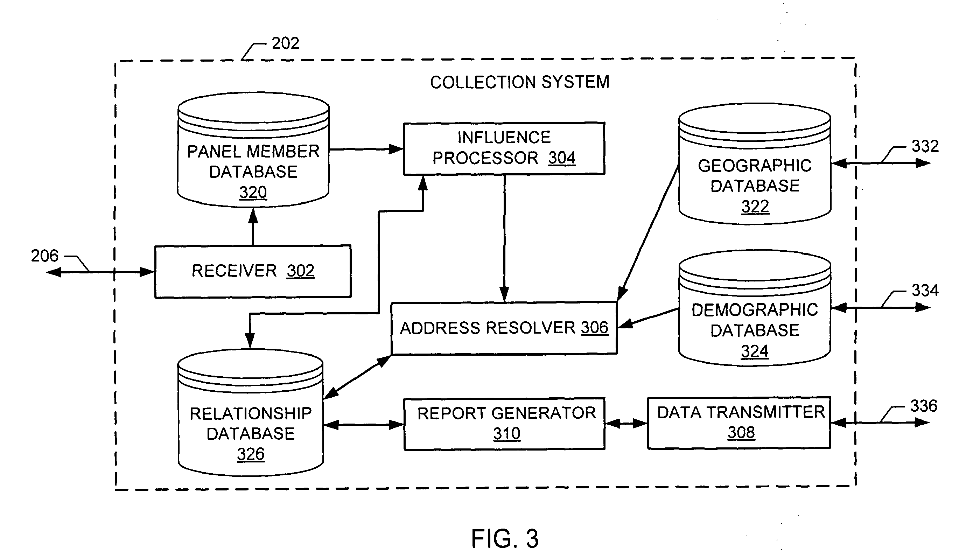

The collection system 202 may include a group of servers in a central location for processing the communication information and/or the communication records or, alternatively, separate servers in different geographic locations. Servers in different geographic locations may collect communication information for different regions and then forward the collected information to a central server for data processing and generating reports. Furthermore, the collection system 202 may include a computer, a server, a measurement entity, a processor, etc. Additionally, the collection system 202 may include a memory to store the communication information, a processor to organize and filter the communication information and an address resolver to associate demographic profiles and/or geographic locations with influential consumers. The collection system 202 includes databases for associating communication identifiers with geographic locations and databases for associating demographic profiles with geographic locations. These databases enable the collection system 202 to associate a demographic profile (e.g., composition) with an influential consumer (e.g., the contacts 104-114 of FIG, 1 and/or individuals). The example collection system 202 of FIG. 2 is described in further detail in conjunction with FIG. 3.

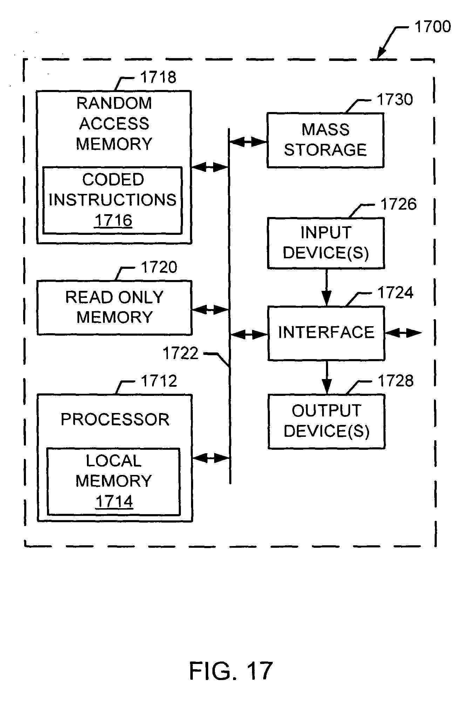

While an example manner of implementing the network system 200 is depicted in FIG. 2, one or more of the interfaces, data structures, elements, processes and/or devices illustrated in FIG. 2 may be combined, divided, rearranged, omitted, eliminated and/or implemented in any other way. For example, the example collection system 202, the example media device 210, the example metering component 214, the example network access device 212, and/or the example transmission medium 250 illustrated in FIG. 2 may be implemented separately and/or in any combination using, for example, machine accessible or readable instructions executed by one or more computing devices and/or computing platforms (e.g., the example processing platform 1700 of FIG. 17). Further, the example collection system 202, the example media device 210, the example metering component 214, the example network access device 212, the example transmission medium 250, and/or more generally, the network system 200 may be implemented by hardware, software, firmware and/or any combination of hardware, software and/or firmware. Thus, for example, any of the example collection system 202, the example media device 210, the example metering component 214, the example network access device 212, the example transmission medium 250, and/or more generally, the network system 200 can be implemented by one or more circuit(s), programmable processor(s), application specific integrated circuit(s) (ASIC(s)), programmable logic device(s) (PLD(s)) and/or field programmable logic device(s) (FPLD(s)), etc. When any of the appended claims are read to cover a purely software or firmware implementation, at least one of the example collection system 202, the example media device 210, the example metering component 214, the example network access device 212, and/or the example transmission medium 250 are hereby expressly defined to include a tangible medium such as a memory, DVD, CD, etc. storing such software or firmware. Further still, the example network system 200 may include additional devices, servers, systems, networks, gateways, portals, and/or processors in addition to, or instead of, those illustrated in FIG. 2 and/or may include more than one of any or all of the illustrated devices, servers, networks, systems, gateways, portals, and/or processors.

FIG. 3 shows the example collection system 202 of FIG. 2 in greater detail. The collection system 202 includes a receiver 302, a panel member database 320, an influence processor 304, an address resolver 306, a data transmitter 308, a report generator 310, a geographic database 322, a demographic database 324, and a relationship database 326. The example collection system 202 receives and processes communication information and/or communication records to associate influential consumers with geographic locations and/or demographic profiles. The collection system 202 may be operated by a metering entity that generates reports summarizing influential consumer relationships associated with demographic profiles.

The example receiver 302 receives communication information from media devices 210, the proxy server 252 and/or the service provider 204 of FIG. 2. The communication information and/or communication records are received via the collected data bus 206. The receiver 302 may receive communication information, communication records, and/or media device usage information from the media devices 210, the proxy server 252, and/or the service provider 204 at predetermined time periods. Alternatively, the receiver 302 may request the communication information from the media devices 210, the proxy server 252, and/or the service provider 204. Furthermore, the receiver 302 may filter and format the communication information and/or the communication records for processing in the collection system 202.

The example receiver 302 of FIG. 3 may request hardware identification information (e.g., MAC addresses) from the media devices 210. Upon receiving hardware identification, the receiver 302 associates the hardware identification with communication information from the corresponding media device. Then, after receiving the communication information, the receiver 302 sends the communication information to the panel member database 320. For example, the receiver 302 may receive communication information and/or communication records including an initiator of the communication, a type of communication, a duration of the communication, a website or service provider of the communication, a time and date of the communication, a bandwidth of the communication, a content of the communication, and/or any other communication information. The receiver 302 uses an assigned IP address included within the communication information to send a request message back to the media device 210. Upon receiving the request message, the media device 210 responds by sending its hardware identification (e.g., the device identifier 226) to the receiver 302. The receiver 302 receives the hardware identification, associates the hardware identification with the communication information, and sends the information to the panel member database 320.

The example panel member database 320 stores communication information and the corresponding media device identification information. Additionally, the panel member database 320 may store the media device usage information 322. The panel member database 320 may organize the communication information by media device identification, by the chronological time at which the communication information was received by the receiver 302, by panel member 102 identifiers, and/or any other method specified by an operator of the collection system 202. Furthermore, when the panel member 102 registers with the collection system 202, the demographic profile and/or the geographic location provided by the panel member 102 is stored in the panel member database 320.

The panel member database 320 may be implemented by a read-only memory (ROM) and/or a random access memory (RAM). Additionally, the relationship database 326, the geographic database 322, and/or the demographic database 324 may be implemented by ROM and/or RAM. The RAM may be implemented by, for example, dynamic random-access memory (DRAM), synchronous dynamic random-access memory (SDRAM), and/or any other type of RAM device(s). The ROM may be implemented by, for example, flash memory(-ies) and/or any other desired type of memory device(s). Access to the panel member database 320, the relationship database 326, the geographic database 322, and/or the demographic database 324 may be controlled by a memory controller (not shown).

The example panel member database 320 stores communication information until the communication information is requested by the influence processor 304. In other example implementations, the panel member database 320 may send the influence processor 304 the communication information at predetermined time periods specified by an operator of the collection system 202 and/or when the panel member database 320 reaches a predefined capacity. For example, the panel member database 320 may send the influence processor 304 the communication information after storing communication information for 1000 media devices.

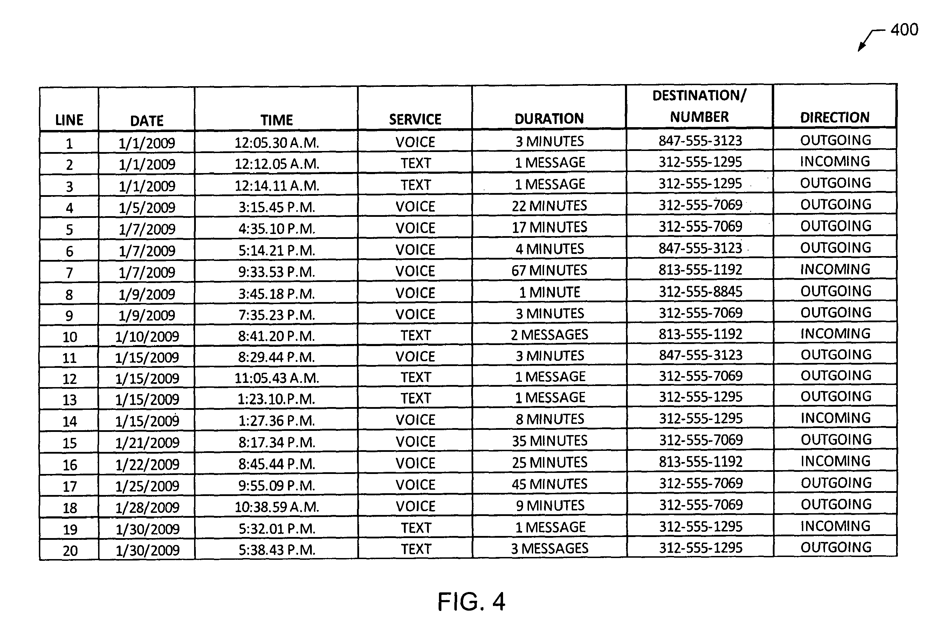

The example influence processor 304 of FIG. 3 filters and processes communication information and/or the communication records within the panel member database 320 to identify which individuals in communication with a panel member are in an influential consumer relationship with the panel member. An example communication record showing compiled communication information for the panel member 102 is described in conjunction with FIG. 4. The influence processor 304 identifies which individuals (e.g., the contacts 104-114) are in an influential consumer relationship by compiling all the instances of communication between each of the individuals and the panel member (e.g., the panel member 102), counting the total number of communications for each individual for each direction of communication, and comparing the total number of communications associated with each individual to a predefined threshold. If the number of communications is greater than the threshold, the individual may be classified as being in an influential relationship with the panel member. Furthermore, if the number of communications initiated by an individual exceeds the threshold, the individual is classified as influential with the panel member. In a similar manner, if the number of communications initiated by the panel member to an individual exceeds the threshold, the individual is classified as influenced by the panel member.

The predefined thresholds may be specified by the metering service. The thresholds may be determined from any statistical metrics or formulas for calculating the number of communications and/or durations of communications necessary to classify a relationship as an influential consumer relationship. The thresholds may be associated with the number of communications, total duration of the communications, content within the communications, and/or any other criteria specified by the metering service. In other example implementations, the thresholds may be determined by studying a sample of individuals to identify patterns indicating an influential consumer relationship. Furthermore, the thresholds for each individual may differ by the geographic location and/or the demographic profile of the panel member.

The individuals within the communication information may be organized and/or represented by one or more communication identifiers. A communication identifier may include a phone number, a hardware identification number (e.g., a MAC address), a wireless identification number, a name, an e-mail address, an instant messaging username, a short message service identifier, or an account number. For example, a communication record in the form of a phone bill lists individuals as phone numbers. In another example, communication information from an e-mail log lists individuals as e-mail addresses. In yet another example, communication information in the form of an instant messaging log may list individuals as instant messaging screen names.

Upon determining which individuals are in an influential consumer relationship with the panel member, the example influence processor 304 of FIG. 3 stores the communication information associated with the individuals and the influential consumer relationship information within the relationship database 326. The influential consumer relationship information includes data indicating if an individual is influential or influences. The influential consumer relationship information also includes the panel member information associated with the influential consumer relationship. Additionally, the influence processor 304 transmits the communication information associated with the individuals in an influential consumer relationship to the address resolver 306.

The filtering by the influence processor 304 enables the collection system 202 to process communication information for specific criteria. This enables the creation of consumer relationship reports based on the specific criteria. The criteria for filtering communication information may include filtering by panel member geographic location, panel member demographic profile, time period, communication type, media device type, and/or by any other criteria specified by an operator of the collection system 202. The communication information filtered by the influence processor 304 may be returned to the panel member database 320 and/or discarded. For example, the influence processor 304 may be configured to filter and retrieve all communication records corresponding to August 1, 2008 through August 30, 2008. The communication information during this time period is forwarded to the address resolver 306 while communication information corresponding to times/dates before August may be discarded. Additionally communication information corresponding to after August is returned to the panel member database 320.

The influence processor 304 may retrieve communication information from the panel member database 320 at predetermined time periods and/or upon request from an operator of the collection system 202. Alternatively, the panel member database 320 may send the influence processor 304 the communication information and/or the communication records for one or more panel members.

In addition to any number and/or type(s) of specialized hardware, firmware and/or logic to perform processing functions, the example influence processor 304 of FIG. 3 includes any number and/or type(s) of specialized and/or general purpose controller(s) and/or processing unit(s) capable of executing coded instructions. For example, the controller and/or processing unit may perform any number and/or type(s) of processing functions by carrying out and/or executing coded instructions present in a memory communicatively coupled and/or within the influence processor 304 (e.g., within a random-access memory (RAM), a read-only memory (ROM) and/or on-board memory of the influence processor 304).

The example address resolver 306 organizes the communication information and/or the individuals in an influential consumer relationship with the panel member information received from the influence processor 304. Additionally, the address resolver 306 may request stored communication information and stored influential consumer relationship information from the relationship database 326. The communication information may be organized by the address resolver 306 to identify the communication identifiers for each influential individual included within the communication information and organizing the communication information by each communication identifier. The address resolver 306 uses the communication identifiers to associate a geographic location and/or a demographic profile with each influential individual.

Upon receiving the communication information and/or the influential individual information, the address resolver 306 may process the communication information in parallel for all of the influential individuals listed in the communication information or, alternatively, may process the communication information serially for each influential individual.

The example address resolver 306 associates each influential individual with a geographic location. The address resolver 306 determines the geographic location by accessing the geographic database 322 and matching the communication identifier associated with an influential individual to a geographic location. The geographic database 322 includes lists of communication identifiers and/or communication identifier prefixes cross-referenced to geographic locations. The lists of communication identifiers and geographic locations (e.g., Geo-communication information) are provided to the geographic database 322 via communication link 332. The example communication link 332 communicatively couples the geographic database 322 to any one of a propriety, commercial, and/or public Geo-communication database. The geographic database 322 may update the Geo-communication information at predetermined time periods and/or upon request from an operator of the collection system 202. For example, the geographic database 322 includes reverse phone number lookup functionality for communication identifiers that include a phone number.
For IP address communication identifiers the geographic database 322 includes a Geo-IP lookup table with data provided by a commercial database such as, for example, Maxmind®, HostIP, Geobytes, etc.

The address resolver 306 matches the communication identifier to a geographic location by either finding the exact communication identifier in the geographic database 322 or, alternatively, by matching a prefix of the communication identifier to a prefix and/or an communication identifier range within the geographic database 322. For example, if the communication identifier is 216.146.64.2, the address resolver 306 may match the 216 prefix to a 216 prefix and/or to a range of IP address prefixes that includes 216 in the geographic database 322. Additionally, the address resolver 306 may then match the 146 prefix of the most used IP address to the corresponding second prefix in the 306 IP address and/or range of IP addresses in the geographic database 322.

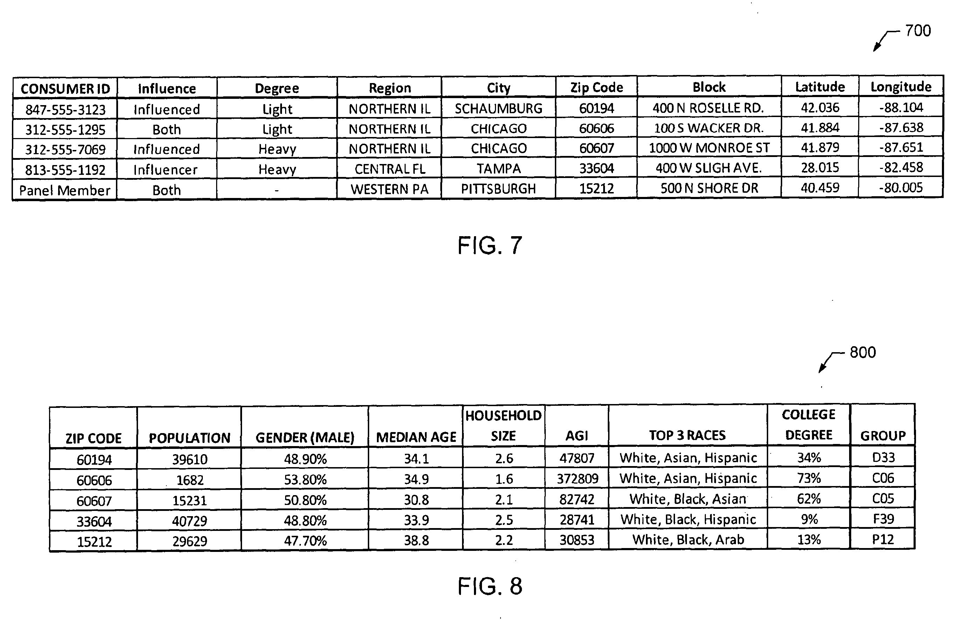

When the address resolver 306 determines the communication identifier is matched to an IP address prefix and/or IP address in the geographic database 322, the address resolver 306 associates the corresponding geographic location with the communication identifier, the corresponding influential individual, and/or the media device 210. The associated geographic location may include a county, a state, a region, a city, a town, a zip code, a block, a latitude, and/or a longitude. The resolution of geographic location may depend on the specificity of geographic location information in the geographic database 322. For example, the address resolver 306 may only resolve an IP address and/or a phone number to a city, while in another example the address resolver 306 may resolve an IP address and/or a phone number to a block within a city. An example table with influential individuals associated with geographic locations is shown in FIG. 7.

In cases when a communication identifier is owned by the service provider 204 and shows an address of the service provider 204, the address resolver 306 may only resolve a geographic location to the general area of the location of the service provider 204. For example, a media device user located in a zip code of 60074 subscribes to the service provider 204 located in a zip code of 60010. Because the IP address is owed by the service provider 204, the data in the geographic database 322 provided by Geo-IP commercial databases shows the IP address having a location at the 60010 zip code. As a result, the address resolver 306 associates the 60010 zip code with the influential individual living in the 60074 zip code. The two zip codes may correspond to different demographic compositions, thus skewing the usage results to the locations of the service providers 204.

To alleviate incorrect address resolution, the address resolver 306 may determine if the communication identifier corresponds to a service provider 204 and, if so, increase the size of the geographic location to include the influential individual. The size increase of the geographic location may come from data from service providers 204 specifying the average distance between media device users and the service provider 204 location. Alternatively, the location of the influential individuals can be inferred by determining the locations of the cell towers, routers, switches, and/or border controllers used in routing the communication information from the media device 210 of the panel member 102 through the transmission medium 250 to the collection system 202. Furthermore, the address resolver 306 may determine that an IP address corresponds to the location of the service provider 204 by checking the number of IP addresses that may correspond to the same address. For example, if the address resolver 306 determines 650 out of 1000 IP addresses are associated with the same street address, the address resolver 306 may associate the IP address to a more general geographic location covering likely geographic locations of influential individuals.

By determining the geographic location of a communication identifier corresponding to an influential individual, the address resolver 306 then associates a demographic profile (e.g., composition) with the influential individual. The demographic profile for an influential individual is determined by accessing the demographic database 324 and matching the geographic location associated with the communication identifier to a geographic location in the demographic database 324. The demographic database 324 includes lists of geographic locations cross-referenced with demographic profiles for each of the listed geographic locations. The demographic profiles may include information relating to race, ethnicity, education level, adjusted gross income per household, number of members per household, gender, population, etc. Additionally, the demographic profile may include a representation of average demographics and/or a listing of demographic information for the corresponding geographic location.

The lists within the demographic database 324 are updated via communication link 334, which communicatively couples the demographic database 324 to any one of a propriety, commercial, and/or public geographic-demographic database. Commercial databases may include Nielsen Claritas, PRIZM, GeoLytics, DemographicsNow, etc. The demographic database 324 may update the geographic-demographic information at predetermined time periods and/or upon request from an operator of the collection system 202.

The address resolver 306 matches influential individuals to a respective demographic profile by matching the associated geographic location associated with each individual. For example, in a case where a communication identifier is associated with a zip code 60607, the address resolver 306 accesses the demographic database 324 and searches for a geographic location corresponding to the 60607 zip code. This may include an exact zip code match in the demographic database 324 or, alternatively, a match to a range of zip codes and/or a more general geographic area (e.g., West Loop of Chicago). The resolution of demographic profile to a geographic area may depend on the specificity of geographic-demographic location information in the geographic database 322.

For example, the address resolver 306 may only resolve demographic profiles to a city, while in another example, the address resolver 306 may resolve a demographic profiles to a block within a city. In other examples, a geographic location may include a plurality of zip codes. In these examples, the address resolver 306 may calculate a weighted average of the demographic profiles associated with each of the zip codes. Alternatively, the address resolver 306 may accumulate the demographic profiles associated with each of the zip codes into a single demographic profile.

Upon matching the geographic location associated with the influential individual to a geographic location within the demographic database 324, the address resolver 306 associates the demographic information corresponding with the matched geographic location with the influential individual. Associating may include linking the demographic information to a record that includes the influential individual represented by the corresponding communication identifier. Alternatively, the address resolver 306 may link a code corresponding to the demographic profile to a record including the influential individual and/or the communication identifier. An example table having media devices associated with geographic locations and demographic profiles is shown in FIG. 8.

The address resolver 306 transmits the communication information including the media device identification, the most used IP address, the associated demographic profile, the associated geographic location, and/or media device usage information to the relationship database 326. The address resolver 306 may transmit the communication information upon associating a demographic profile with a media device or, alternatively, upon associating a group of media devices to demographic profiles. An operator of the collection system 202 may specify when the address resolver 306 transmits communication information and associated demographic profiles to the relationship database 326.

The relationship database 326 stores information associating influential individuals with demographic information and/or geographic profiles for generating summary consumer relationship reports. The information may be in record form with a line for each individual including the communication identifier representing the individual, an associated geographic location, and/or an associated demographic profile. The relationship database 326 may organize and/or compile the information by panel member, by type of communication, by type of media device, by geographic location, by demographic information, and/or by time periods. Additionally, an operator of the collection system 202 may specify the organization of the relationship database 326.

The example report generator 310 generates reports from the compiled and organized information in the relationship database 326. The criteria for each report may be determined by an operator of the collection system 202 or, alternatively, the report generator 310 may generate reports for predefined geographic and/or demographic groups, geographic locations, and/or demographic profiles. Additionally, reports may be generated associating groups of influential individuals with geographic locations and/or demographic profiles. The report generator 310 may compile influential individual information to form generalized relationships between groups of individuals in different geographic locations and/or between groups of individuals with demographic profiles.

For example, the report generator 310 may compile influential individual information that includes influential individuals from a first specific geographic location with a first demographic profile that influence individuals from a second geographic location with a second demographic profile. The report generator 310 may store the individuals from the first geographic location with the first demographic profile as a first group in the relationship database 326. Additionally, the report generator 310 may store the individuals from the second geographic location with the second demographic profile as a second group in the relationship database 326. The report generator 310 may utilize the group information for summarizing influential consumer relationship trends. The influential individual information may include geographic location information and/or demographic profile information for panel members (e.g., the panel member 102) and/or individuals (e.g., the contacts 104-114).

Additionally, the report generator 310 may calculate market statistics from the sample communication information, the geographic locations, the demographic profiles, and/or the relationship information associated with groups of the influential individuals. For example, the example report generator 310 may construct a marketing report showing the influence of consumers from the Pittsburgh, Pennsylvania area with consumers in the Charlotte, North Carolina area. The report generator 310 accesses the relationship database 326 for communication information, influential individual information, and/or group information associated with the Pittsburgh area that includes an influential consumer relationship with individuals from the Charlotte area. The report may show which demographic profiles from the Pittsburgh area influence which demographic profiles from the Charlotte area. Marketers and/or product manufactures with a goal of targeting certain demographic profiles in the Charlotte area may use the report to identify the Pittsburgh area as a potential location to advertise as a means of ultimately reaching their target audience.

The report generator 310 may also combine data for smaller geographic locations (e.g., zip codes) into larger geographic regions (e.g., a city). The combining of geographic locations may be useful for reports covering general geographic areas. The communication information with the associated demographic profiles ensures that if geographic regions are combined, the demographic profiles resulting from the combination are averaged by numbers of influential individuals associated with each smaller area. Alternatively, the report generator 310 may access the demographic database 324 and associate the larger geographic region with a demographic profile corresponding to a similar geographic location in the demographic database 324.

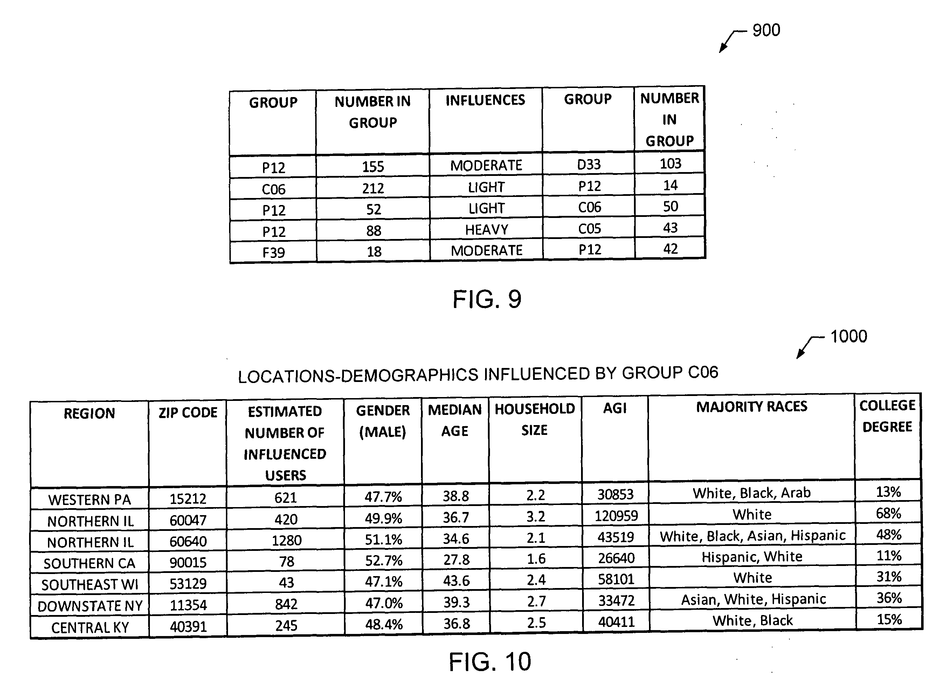

The reports generated by the report generator 310 may be used by media device manufacturers, marketing entities, application developers, media device service providers, third party statistical agencies, and/or any other interested party. Each report may be tailored to the party receiving the report. For example, a report for media device manufacturers may include total sampled numbers of influential individuals for a geographic location, market estimates of the total numbers of influential individuals in the geographic location, and/or the demographic profile for the influential individuals in the geographic location. The media device manufacturers may use this information for planning distribution channels, adding design improvements for different types of users, etc. Examples of influential consumer relationship reports are shown in FIGS. 9 and 10.

The example data transmitter 308 of FIG. 3 transmits the generated reports via a communication link 336 to media device manufacturers, marketing entities, application developers, media device service providers, third party statistical agencies, and/or any other interested party. The data transmitter 308 may send reports compiled in the report generator 310 in response to a request from an operator of the collection system 202, at predefined time periods, and/or upon generation of the reports.

While an example manner of implementing the collection system 202 is depicted in FIG. 3, one or more of the interfaces, data structures, elements, processes and/or devices illustrated in FIG. 3 may be combined, divided, rearranged, omitted, eliminated and/or implemented in any other way. For example, the example receiver 302, the example influence processor 304, the example address resolver 306, the example relationship database 326, the example geographic database 322, the example demographic database 324, the example report generator 310 and/or the example data transmitter 308 illustrated in FIG. 3 may be implemented separately and/or in any combination using, for example, machine accessible instructions executed by one or more computing devices and/or computing platforms (e.g., the example processing platform 1700 of FIG. 17). Further, the example receiver 302, the example influence processor 304, the example address resolver 306, the example relationship database 326, the example geographic database 322, the example demographic database 324, the example report generator 310, the example data transmitter 308, and/or more generally, the collection system 202 may be implemented by hardware, software, firmware and/or any combination of hardware, software and/or firmware. Thus, for example, any of the example receiver 302, the example influence processor 304, the example address resolver 306, the example relationship database 326, the example geographic database 322, the example demographic database 324, the example report generator 310, the example data transmitter 308, and/or more generally, the collection system can be implemented by one or more circuit(s), programmable processor(s), application specific integrated circuit(s) (ASIC(s)), programmable logic device(s) (PLD(s)) and/or field programmable logic device(s) (FPLD(s)), etc. When any of the appended claims are read to cover a purely software or firmware implementation, at least one of the example receiver 302, the example influence processor 304, the example address resolver 306, the example relationship database 326, the example geographic database 322, the example demographic database 324, the example report generator 310 and/or the example data transmitter 308 are hereby expressly defined to include a tangible medium such as a memory, DVD, CD, etc. storing such software or firmware. Further still, the example collection system 202 may include additional devices, servers, systems, networks, gateways, portals, and/or processors in addition to, or instead of, those illustrated in FIG. 3 and/or may include more than one of any or all of the illustrated devices, servers, networks, systems, gateways, portals, and/or processors.

FIG. 4 shows an example communication record 400 for the panel member 102 of FIG. 1. The communication record 400 of FIG. 4 includes communication information compiled from the dates 1/1/2009 until 1/30/2009 for the panel member 102. The communication record 400 may have been compiled by the metering component 214, the proxy server 252, and/or the service provider 204 and transmitted to the collection system 202 of FIG. 2. The example communication record 400 of FIG. 4 includes phone usage communication information. Other example communication records may include a log of e-mails, an instant messaging log, a usage history of a social networking application, and/or a media device usage report.

The example communication record 400 includes data fields for the line number (e.g., LINE), a date of a communication (DATE), a time of a communication (TIME), a type of communication service utilized (SERVICE), a duration of the communication (DURATION), an individual in communication with the panel member 102 (DESTINATION/NUMBER), and a direction of a communication (DIRECTION). Within the SERVICE field, a VOICE entry indicates a cell phone communication occurred and a TEXT entry indicates a text message communication occurred. In the DIRECTION field, OUTGOING indicates the communication was initiated by the panel member 102 and INCOMING indicates the communication was initiated by the number in the DESTINATION/NUMBER field. For example, line 1 shows that on 1/1/2009 at 12:05 A.M. the panel member 102 placed an outgoing cell phone call to an 847-555-3123 number. The communication lasted three minutes. Then, in line 2 at 12:12 A.M. on the same day, the panel member 102 received one text message from a 312-555-1295 telephone number.

The example communication record 400 is organized by date and time of the communication. In other example implementations the communication record 400 may be organized by an individual in communication with the panel member 102, a service type, a direction of the communication, etc. Furthermore, other communication records may include addition fields such as, for example, IP address, e-mail address, screen name, website, bandwidth usage, communicated keywords, etc.

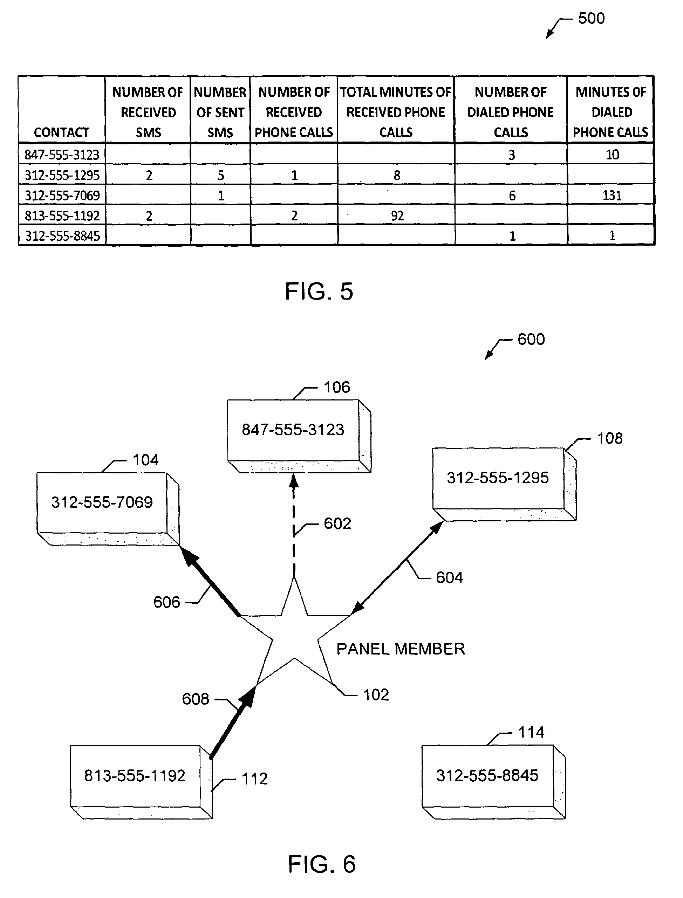

FIG. 5 shows an example table 500 summarizing communications from the example communication record 400 of FIG. 4. The example table 500 is summarized by individual in communication with the panel member 102. In other examples, the table 500 may include a summary of individuals in communication with the panel member 102 from a plurality of communication records and/or from a plurality of communication information.

The example table 500 includes data fields for communication identifier (CONTACT), number of received text messages (e.g., SMS) by the panel member 102, number of sent text messages from the panel member, number of received phone calls by the panel member, total number of minutes of received phone calls, number of dialed phone calls by the panel member 102, and total number of minutes of dialed phone calls. In other examples, the table 500 may include fields for total number of e-mails sent and/or received, total number of instant messages sent and/or received, and/or fields for specific keyword types (e.g., Superbowl XLIII, designer boots, etc).

The example table 500 may be generated by the influence processor 304 of FIG. 3. The influence processor 304 may receive the communication record 400 and compile the communication information by communication identifier and communication type. For example, the influence processor 304 selects the 847-555-3123 communication identifier from the communication record 400 and locates other communications within the communication record 400 with the same identifier. The influence processor 304 then organizes the communication by communication type (e.g., SMS or phone) and counts the total number of communications. In the case of a phone communication type, the influence processor 304 counts the total number of minutes of communication time. The influence processor 304 then stores the summarized information into the example table 500 for each communication identifier.

Upon generating the example table 500, the influence processor 304 compares the number of communications and/or summation of communication time for each communication identifier with a predefined threshold to determine which individuals can be classified as being in an influential consumer relationship with the panel member 102. For example, the influence processor 304 may classify communication identifiers with 2 to 3 communications and/or 10 to 30 minutes of communication within a 30 day time span as lightly influential, 4 to 5 communications and/or 30 to 70 minutes of communication within a 30 day time span as regularly influential, and 6 or more communications and/or more than 70 minutes of communication within a 30 day time span as heavily influential. The predefined threshold values may be determined by a metering service and/or by an operator of the collection system 202. Additionally, the influence processor 304 may label a communication identifier as influential with the panel member 102, influenced by the panel member, and/or both influential and influenced by the panel member 102.

FIG. 6 shows a diagram of example influential consumer relationships 600 determined from the example table 500 of FIG. 5. While FIG. 1 shows consumer relationships 100 of any contact 104-114 in communication with the panel member 102, FIG. 6 shows influential consumer relationships 600 between the contacts 104, 106, 108, and 112 and the panel member 102. The contacts 104, 106, 108, 112, and 114 are represented by their corresponding communication identifiers. In other examples, the influential consumer relationships 600 may include communication information from other time periods, communication information from additional communication records, and/or communication information associated with additional panel members. The additional panel members may be used to create a larger relationship diagram with interconnections between panel members and/or between individuals in communication with the panel members.

In the example of FIG. 6, the influence processor 304 determines the influential consumer relationships 600 from the example table 500 of FIG. 5. For example, the contact 106 of FIG. 1 corresponding to communication identifier 847-555-3123 is lightly influenced by the panel member 102 based on the 3 phone calls summarized in the table 500. This lightly influential consumer relationship is indicated by a relationship link 602. The contact 108 corresponding to the communication identifier 312-555-1295 is determined to be both regularly influenced and regularly influential with the panel member 102 as indicated by a relationship link 604. The contact 104 corresponding to the communication identifier 312-555-7069 is heavily influenced by the panel member 102 based on the six phone calls. This influential consumer relationship is indicated by a relationship link 606.

Furthermore, the contact 112 corresponding to communication identifier 813-555-1192 is heavily influential with the panel member 102, as indicated by a relationship link 608. The contact 114, as indicated by the communication identifier 312-555-8845, is not in an influential consumer relationship with the panel member 102. As a result, a relationship link is not formed. Additionally, the contact 110 of FIG. 1 was not in communication with the panel member 102 during the time period of 1/1/2009-1/30/2009. Upon determining the influential individuals (e.g., the contacts 104, 106, 108, and 112) and the type of influential consumer relationship of each influential individual, the influence processor 304 stores the information associated with the influential consumer relationships 600 including the relationship links 602-608 within the relationship database 326 of FIG. 3.

FIG. 7 shows a table 700 of example geographic locations associated with the influential individuals from the example table 500 of FIG. 5. The example table 700 is generated by the address resolver 306 of FIG. 3 accessing the geographic database 322 and associating a geographic location with each communication identifier. The table 700 of FIG. 7 includes data fields for a communication identifier (CONSUMER ID), a type of influence, a degree of influence, a geographic region, a city, a zip code, an address (Block), a latitude, and a longitude. The communication identifier field, type of influence field and/or the degree field is populated with influence information stored within the relationship database 326. In other example implementations, the table 700 may include additional fields for geographic location information or fewer fields for geographic location information.

To associate the communication identifier with a geographic location, the address resolver 306 cross-references a communication identifier with a geographic location in the geographic database 322. For example, the address resolver 306 uses a reverse phone number lookup table within the geographic database 322 to cross-reference the phone number communication identifier 847-555-3123 to the 400 N Roselle Rd. address. The address information corresponding to the phone number is then populated in the geographic location data fields within the table 700.

In other examples, the address resolver 306 may access a Geo-IP database within the geographic database 322 to associate an IP address communication identifier with a geographic location. Furthermore, geographic information associated with the panel member 102 within the table 700 may be provided by the panel member 102 when the panel member 102 registers with a metering service. In other examples, the address resolver 306 may use a communication identifier associated with the panel member 102 to associate a geographic location with the panel member 102.

FIG. 8 shows a table 800 of example demographic profiles associated with the geographic locations within the table 700 of FIG. 7. The table 800 is created by the address resolver 306 accessing the demographic database 324 of FIG. 3 to associate a demographic profile with the geographic locations within the table 700. The demographic database 324 includes a listing of geographic locations and demographic profiles associated with each geographic location. The geographic locations in the demographic database 324 may be listed by zip codes, city, region, etc. In the example of FIG. 8, the demographic profiles are associated with zip codes. The demographic database 324 may include geographic-demographic lookup information from any public, commercial, and/or propriety database such as, for example, Nielsen Claritas.

The example table 800 includes data fields for demographic profiles such as, for example, POPULATION, GENDER MEDIAN AGE, HOUSEHOLD SIZE, AGI (Adjusted Gross Income), TOP 3 RACES, and COLLEGE DEGREE. Additionally, the table 800 may include fields for other types of demographic information. The POPULATION field shows the population of a geographic location. The GENDER field shows a percentage of males living in a geographic location. The MEDIAN AGE field shows a media age of a population and a household size shows an average number of people per residence in a geographic location. The AGI field shows an average adjusted gross income for a population in a geographic location. The TOP 3 RACES field shows top 3 races or ethnicities for a geographic location. The COLLEGE DEGREE field shows what percentage of a population of a geographic location has obtained a college degree. In other examples, the information within each of the demographic fields may include a distribution of demographic data, an average profile or a typical member, or a listing of the top 3-5 demographic compositions for a geographic location.

The GROUP data field within the example table 800 stores a group identification number that corresponds to the geographic location and associated demographic profile. For example, in the first line of the table 800 the 60194 zip code and the associated demographic profile correspond to the D33 group identification number. The address resolver 306 may store influential individuals together with the same geographic location and demographic profile by the group identification number. Alternatively, instead of assigning a geographic location and/or a demographic profile to an influential individual, the address resolver 306 may assign a group number to the influential individual. The group number is stored with the influential relationship information associated with the influential individual within the relationship database 326. By only assigning a group number, the amount of memory used by each influential individual is reduced. Furthermore, when the report generator 310 compiles influential consumer relationship reports, the influential individuals can be accessed by a group identification number instead of searching though data fields of addresses, zip codes, cities, demographic information, etc.

To create the data association shown in table 800, the address resolver 306 matches a geographic location of a communication identifier to a zip code and/or a range of zip codes in the demographic database 324. For example, the 847-555-3123 communication identifier is associated with the geographic location 60194 shown in FIG. 7. The address resolver 306 matches the 60194 zip code to the 60194 zip code listed in the demographic database. Upon matching the zip codes, the address resolver 306 associates the demographic profile corresponding to the 60194 zip code and/or associates a group identification number corresponding to the 60194 zip code and the matched demographic profile with the 847-555-3123 communication identifier.

In other example implementations, the address resolver 306 may match geographic regions, cities, and/or a latitude and a longitude to a similar specified location in the demographic database. Additionally, the table 800 may be organized by geographic locations, demographic profile information, group identification number, and/or any other organization specified by an operator of the collection system 202.

FIG. 9 shows an example report 900 of influential consumer relationships between a plurality of demographic profiles and geographic regions. The example report 900 is generated by the report generator 310 in response to a request from the metering service and/or an operator of the collection system 202. The report generator 310 compiles influential individual relationship information from the relationship database 326 of FIG. 3 based on specified criteria. The example table 900 shows groups that influence groups and the degree of that influence.

The example report 900 of FIG. 9 includes data fields for a group identification number, a number of influential individuals associated with the group, a degree of influence, a group identification number of an influenced group, and a number of influential individuals within the influenced group. For example, the first line of the report 900 shows that 155 influential individuals associated with the P 12 group moderately influence 103 individuals associated with the D33 group. The P12 group includes the panel member 102 and the D33 group includes the contact 106 associated with the communication identifier 847-555-3123 as shown in FIGS. 7 and 8. The moderate degree of influence is an average of the influence of each of the individuals in the P12 group. Furthermore, the individuals within any of the groups shown in the report 900 may include panel members and/or contacts of panel members. In other examples, the report 900 may include the geographic location and/or the demographic profile associated with each listed group identification number. For example, the report 900 may include the WESTERN PA region, the 15212 zip code, the 38.8 median age, the 30853 adjusted gross income, the White, Black, and/or Asian races, and the 13% college degree information adjacent to the P12 group listing.

The report generator 310 may generate the example report 900 of FIG. 9 by compiling influential individual information, panel member information, and/or influential individual relationship information by group number identification number. For example, for the P 12 group, the report generator 310 compiles all influential individuals and/or panel members with the 15212 geographic location and the associated demographic profile. The report generator 310 narrows this group by filtering for individuals and/or panel members with influence over an individual associated with the D33 group. The report generator 310 then counts the number of influential individuals and/or panel members that match. Similarly, the number of influential individuals and/or panel members in the group D33 is determined.

Marketing entities, device manufactures, resellers, and/or any other interested party may use the information within the report 900 for utilizing influential consumer relationships as a means of target marketing. For example, the report 900 may be used to determine which geographic locations and/or demographics to target to reach the greatest number of influential individuals. Additionally, the report 900 may be used to determine which group influences the most number of individuals per individual. Furthermore, the report 900 may be used to determine which geographic locations should be included within a common marketing campaign.

FIG. 10 shows an example report 1000 of a plurality of demographic profiles and geographic locations influenced by a single demographic profile from a particular geographic location. The example report 1000 shows geographic locations and demographic profiles that are influenced by individuals and/or panel members associated with the C06 group. The C06 group includes the contact 108 of FIG. 1.

The example report 1000 of FIG. 10 is generated by the report generator 310 of FIG. 3. The example report 1000 may have been specified to be created by the metering service and/or an operator of the collection system 202. For example, the metering service may want to show the total number of individuals influenced by individuals associated with the C06 group. As a result, the report generator 310 compiles geographic locations and/or demographic data for every individual within the relationship database 326 that is influenced by an influential individual associated with the C06 group. The report generator 310 organizes the individuals by geographic location and corresponding demographic profile information. In other examples, the report 1000 may include information by group number similar to the report 900 of FIG. 9.

Marketing entities, device manufactures, resellers, and/or any other interested party may use the information within the report 1000 to determine which geographic locations and/or demographic profiles are influenced by individuals within the geographic location associated with the C06 group. For example, the report 1000 shows that individuals associated with the C06 group have the most influence over individuals from the 60640, 11354, and the 11212 zip codes the most. Marketers may view this information and determine which types of products and/or advertising styles to use in the geographic location associated with the C06 group to influence consumers in the 60640, 11354, and the 11212 zip codes.

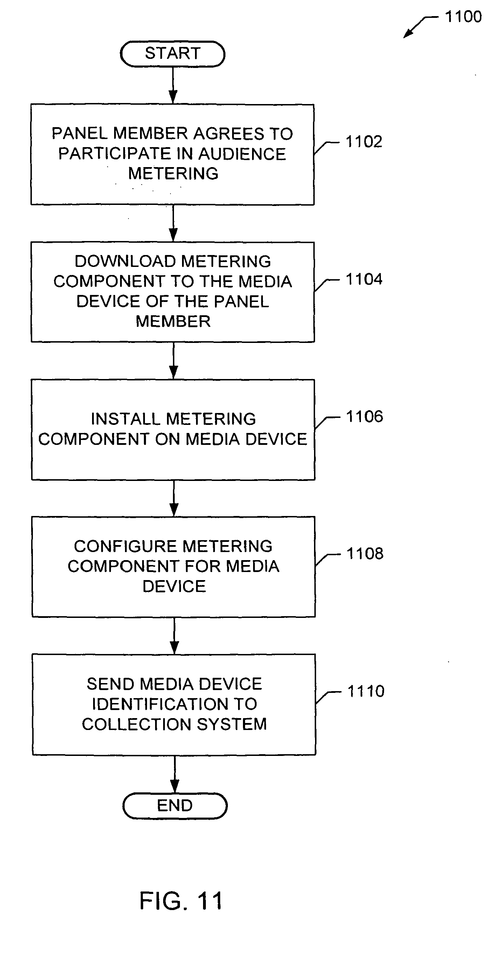

FIGS. 11, 12, 13, 14, 15, and 16 are flowcharts representative of example methods that may be executed to associate demographic and geographic information with influential consumer relationships. The example methods may be executed using, for example, a processor system such as the system 1700 of FIG. 17. However, one or more of the blocks depicted in the flowcharts may be implemented in any other manner, including by dedicated purpose circuitry, manual operations, etc. Additionally, although the example methods are described with reference to the flowcharts of FIGS. 11, 12, 13, 14, 15, and 16, other methods to associate demographic and geographic information with influential consumer relationships may additionally or alternatively be used. For example, the order of execution of the blocks depicted in the flowcharts of FIGS. 11, 12, 13, 14, 15, and 16 may be changed, and/or some of the blocks described may be rearranged, eliminated, or combined.

The example method 1100 represented by FIG. 11 may be performed to implement the example metering component 214 and/or the example collection system 202 of FIG. 2. The example method 1100 may be executed at predetermined intervals, based on an occurrence of a predetermined event, in response to a user request, etc., or on any combination thereof. For example, the method 1100 may be executed at predetermined intervals, such as hourly, daily, etc. Additionally or alternatively, the example method 1100 may be executed upon the occurrence of a trigger generated remotely such as, for example, a panel member activating and/or registering a newly purchased media device.

The example method 1100 of FIG. 11 begins when a panel member registers and/or agrees to participate in communication metering (block 1102). The metering includes monitoring and/or storing a plurality of communication information. The panel member may register by visiting a metering service, by responding to a solicited and/or unsolicited communication from the metering service asking the panel member to participate in the metering survey, and/or by the panel member agreeing to a request from a preinstalled metering component 214 prompting the panel member to participate in the metering survey. Registering may also include the panel member indicating the type of their media device, their geographic location and/or their demographic profile so that the corresponding metering component 214 may be installed. Once the panel member agrees to have the media device metered, the metering component 214 is downloaded to and installed on the media device (block 1104). Alternatively, the metering component 214 may be manually attached to the media device. Next, the metering component 214 is installed onto the media device (block 1106). This includes the media device running an installation program associated with the metering component 214. Additionally or alternatively, this may include installing any hardware components of the metering component 214 within the media device.

The example method 1100 continues when the metering component 214 is configured within the media device (block 1108). Configuration includes setting up one or more application adapters and/or hardware meters for the corresponding applications and/or hardware functions within the media device, creating connections between the application adapters and/or hardware meters to the network access device 212, allocating and/or creating space within a memory of the media device, polling applications and/or hardware functions for metering capability, etc. Once the metering component 214 has been configured, the metering component 214 sends media device identification to the collection system 202 (block 1110). Once the collection system 202 has received the media device identification from the metering component 214, the example method 1100 ends.

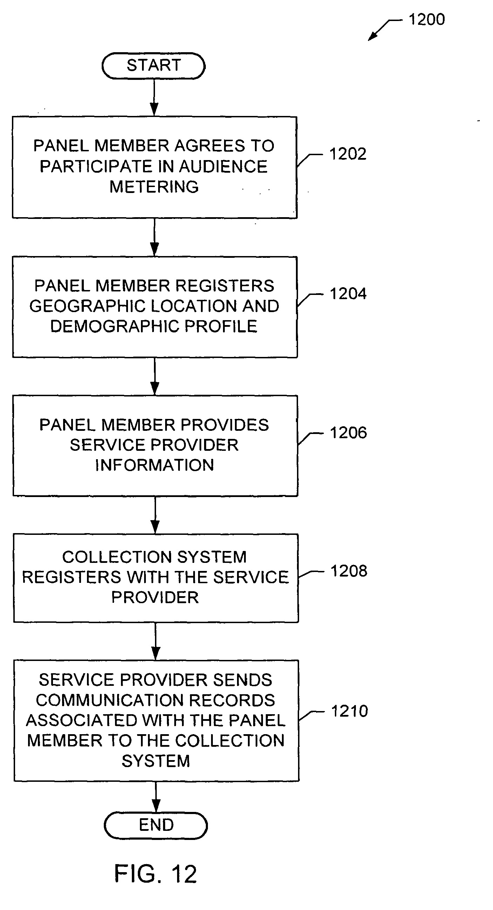

The example method 1200 represented by FIG. 12 may be performed to implement the example metering component 214 and/or the example collection system 202 of FIG. 2. The example method 1200 may be executed at predetermined intervals, based on an occurrence of a predetermined event, in response to a user request, etc., or on any combination thereof. For example, the method 1200 may be executed at predetermined intervals, such as hourly, daily, etc. Additionally or alternatively, the example method 1200 may be executed upon the occurrence of a trigger generated remotely such as, for example, a panel member activating and/or registering a newly purchased media device.

The example method 1200 of FIG. 12 begins when a panel member agrees to participate in communication metering (block 1202). The metering includes monitoring and/or storing a plurality of communication information. Next, the panel member registers by visiting a metering service, by responding to a solicited and/or unsolicited communication from the metering service asking the panel member to participate in the metering survey, and/or by the panel member agreeing to a request from a preinstalled metering component 214 prompting the panel member to participate in the metering survey (block 1204).

In addition to registering one or more media devices, the panel member registers their geographic location and/or demographic profile with the metering service. Furthermore, the panel member registers by providing service provider account information to the metering service (block 1206). The service provider account information may include account numbers and/or communication identifiers associated with a service provider to access and/or utilize services provided by the service provider. By providing service provider account information, the panel member authorizes the metering service to access and/or contact the service provider to receive communication records associated with the panel member.

The example method 1200 continues when the metering service, via the example collection system 202 of FIG. 2, contacts and/or registers with the service provider associated with the panel member (block 1208). The metering service contacts and/or registers with the service provider via the account information provider by the panel member. In some examples, the service provider may contact the panel member and request verification granting the metering service access to communication records associated with the panel member. The example method 1200 of FIG. 12 ends when the service provider transmits communications records associated with the panel member to the collection system 202 and/or the metering service (block 1210). In other example implementations, the panel member may register a plurality of service providers. In this case the example method 1200 via the metering service may contact and/or register for communication record information from each of the service providers associated with the panel member.

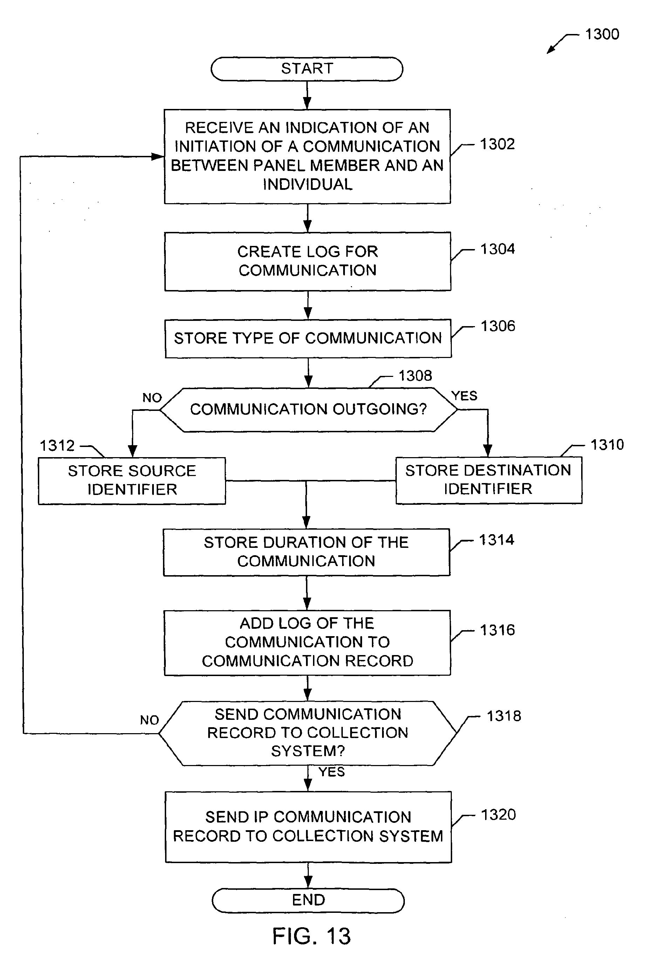

The example method 1300 represented by FIG. 13 may be performed to implement the example metering component 214, the example service provider 204, the example proxy server 252, and/or the example collection system 202 of FIG. 2. The example method 1300 of FIG. 13 may be executed at predetermined intervals, based on an occurrence of a predetermined event, in response to a user request, etc., or on any combination thereof. For example, the method 1300 may be executed at predetermined intervals, such as hourly, daily, etc. Additionally or alternatively, the example method 1300 may be executed upon the occurrence of a trigger generated remotely such as, for example, a panel member initiating and/or receiving a communication.

The example method 1300 of FIG. 13 begins when the metering component 214, the proxy server 252, and/or the service provider 204 receives an indication of an initiation of a communication between a panel member and another individual (block 1302). The indication of an initiation of a communication may come from the individual contacting the panel member and/or the panel member contacting the individual. The indication may include a session initiation protocol (SIP) message and/or any other type of communication initiation message and/or signal. Next, the example method 1300 of FIG. 13 creates a log for the newly initiated communication (block 1304). The log may include fields described in conjunction with the table 400 of FIG. 4.

The example method 1300 continues when the type of communication is stored to the newly created log (block 1306). Then, the method 1300 determines if the communication was outgoing (e.g., initiated by the panel member) (block 1308). If the communication is outgoing, the example method 1300 stores the destination communication identifier of the individual contacted by the panel member (block 1310). Additionally, the example method 1300 may store an indication that the communication is outgoing. However, if the communication is not outgoing, the example method stores the source communication identifier associated with the individual contacting the panel member (block 1312). Furthermore, the method 1300 may store to the log an indication that the communication is incoming.

Upon storing the communication identifier associated with the individual in communication with the panel member, the example method 1300 of FIG. 13 stores the communication duration to the log (block 1314). In some examples, the method 1300 remains at block 1314 until the communication is finished. Upon the completion of the communication, the method 1300 records the communication duration. In other examples, if the communication is a text-type message (e.g., e-mail, instant messaging, text messaging), the method 1300 may store the number and/or the size of the communication message.

The example method 1300 continues when the log of the communication is added to a communication record (block 1316). The communication record stores a plurality of communication logs between the panel member and individuals in communication with the panel member. The communication record may include the example table 400 of FIG. 4. Next, the example method 1300 of FIG. 13 determines if the communication record is to be sent to the collection system 202 of FIG. 2 (block 1318). If the method 1300 is not to send the communication record, the method 1300 returns to monitoring for and/or receiving indications of initiations of communications associated with the panel member (block 1302).

If the communication record is to be sent to the collection system 202 (block 1318), the method 1300 sends the communication record to the collection system 202 (block 1320). The method 1300 may determine to send the communication record based on instructions from a metering service, from an operator of the collection system 202, if the size of the communication record reaches a predefined threshold, and/or if the communication record comprises a predefined capacity of memory within a media device. Upon sending the communication record (block 1320), the example method 1300 ends.

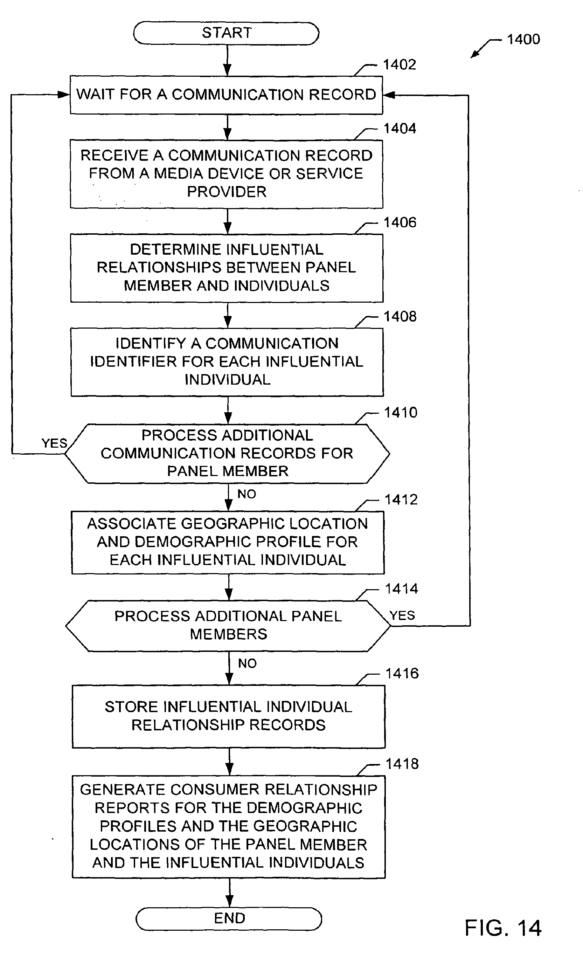

The example method 1400 represented by FIG. 14 may be performed to implement the example collection system 202 of FIG. 2. The example method 1400 of FIG. 14 may be executed at predetermined intervals, based on an occurrence of a predetermined event, in response to a user request, etc., or on any combination thereof. For example, the method 1400 may be executed at predetermined intervals, such as hourly, daily, etc. Additionally or alternatively, the example method 1400 may be executed upon the occurrence of a trigger generated remotely such as, for example, the collection system 202 receiving a communication record.

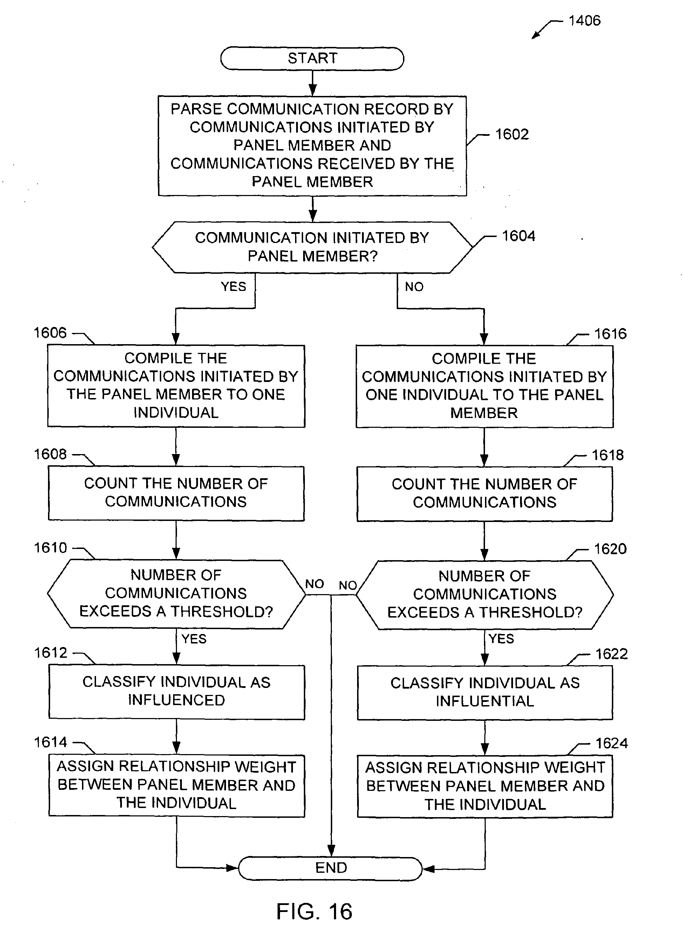

The example method 1400 of FIG. 14 begins when the collection system 202 waits for a communication record (block1402). Next, the collection system 202 receives a communication record from at least the metering component 214 within a media device, the proxy server 252 and/or the service provider 204 of FIG. 2 (block 1404). Next, the influence processor 304 of FIG. 3 determines influential relationships between a panel member associated with the communication record and individuals in communication with the panel member (block 1406). The method 1406 for determining influential individuals is described in greater detail in conjunction with FIG. 16.

The example method 1400 of FIG. 14 continues when the influence processor 304 identifies a communication identifier for each influential individual (block 1408). Next, the collection system 202 determines if the influence processor 304 is to process additional communication records associated with the panel member (block 1410). If the influence processor 304 is to process additional communication records, the collection system 202 waits for additional communication records (block 1402). Additionally, or alternatively, if the influence processor 304 is to process additional communication records, the influence processor 304 may access the panel member database 320 for communication records associated with the panel member. For example, if the influence processor 304 has finished identifying influential individuals from a phone communication record associated with a panel member, the influence processor 304 may access the panel member database 320 for any e-mail communication records, instant messaging communication records, etc. associated with the same panel member.

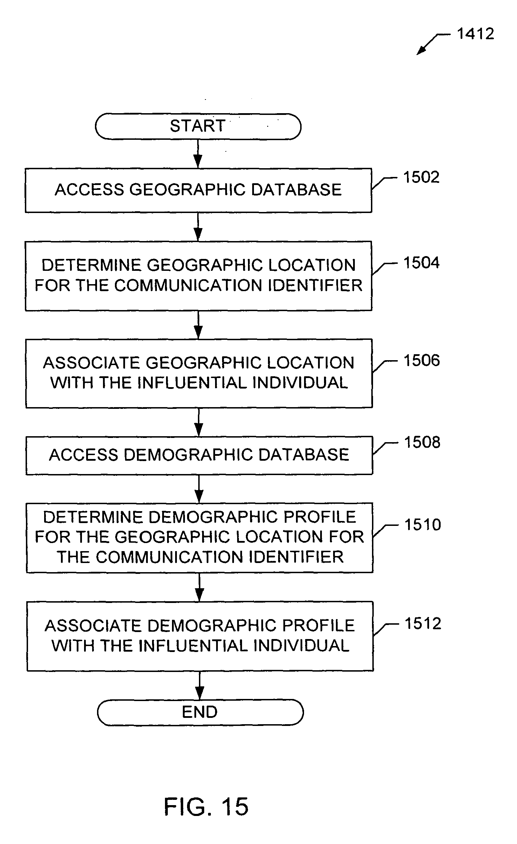

If the influence processor 304 is not to process any additional communication records (block 1410), the address resolver 306 associates a geographic location and a demographic profile with each influential individual (block 1412). In cases when a panel member does not register their geographic location and/or demographic profile, the address resolver 306 may determine a geographic location and/or a demographic profile for the panel member. The geographic location may include a region, a zip code, a town, a city block, and/or an address. The demographic profile may include race, ethnicity, education level, adjusted gross income per household, number of members per household, gender, population, etc. Additionally, the demographic profile may include a representation of average demographics and/or a listing of demographic information for the corresponding geographic location. The method 1412 for associating a geographic location and a demographic profile to influential individuals is described in greater detail in conjunction with FIG. 15.

The example method 1400 of FIG. 14 continues when the collection system 202 determines if additional panel members should be processed (block 1414). The collection system 202 may determine to process additional panel members from an instruction from a metering service, from an operator of the collection system, by a predetermined number of panel members for processing to generate an influential consumer relationship report, and/or by a predefined number of panel members for processing per time period. If the collection system 202 is to process additional panel members (block 1414), the collection system waits for another communication record (block 1402). In other examples, the collection system 202 may instruct the influence processor 304 to process additional panel members with communication records stored in the panel member database 320.

If the collection system 202 is not to process additional panel members (block 1414), the address resolver 306 stores the influential individual relationship information (e.g., records) in the relationship database 326 (block 1416). The influential individual relationship information may include influential relationship information between an influential individual and a panel member, a communication identifier representing an influential individual, a geographic location associated with the influential individual, and/or a demographic profile associated with an influential individual.

Next, the report generator 310 generates consumer relationship reports for the demographic profiles and/or the geographic locations associated with the panel member and the influential individuals (block 1418). The reports may include the reports 900 and 1000 described in conjunction with FIGS. 9 and 10. Additionally, the reports may include any description (e.g., a list, a chart, a map, etc) showing consumer influence associated with a geographic location and/or a demographic profile in relation to another geographic location and/or demographic profile. The reports may be sent to media device manufacturers, marketing entities, and/or any other interested entity. Upon generating an influential consumer relationship report (block 1418), the example method 1400 ends.

The example method 1412 represented by FIG. 14 may be performed to implement the example collection system 202 and/or the address resolver 306 of FIG. 3. The example method 1412 may be executed at predetermined intervals, based on an occurrence of a predetermined event, in response to a user request, etc., or on any combination thereof. For example, the method 1412 may be executed at predetermined intervals, such as hourly, daily, etc. Additionally or alternatively, the example method 1412 may be executed upon the occurrence of a trigger generated remotely such as, for example, the address resolver 306 receiving one or more influential individuals from the influence processor 304.

The operations of block 1412 are shown in detail in FIG. 15. Although the example method 1412 is described herein as processing information for a single influential individual, the example method 1412 may concurrently process information for one or more influential individuals. Alternatively, the example method 1412 may process geographic and/or demographic information for each influential individual in series at each step.

The method 1412 begins when the address resolver 306 accesses the geographic database 322 (block 1502). The geographic database 322 may include cross references between phone numbers, IP address, screen names, etc. and regions, zip codes, towns, city blocks, street addresses, etc. Using the information in the geographic database 322, the address resolver 306 determines a geographic location for the communication identifier associated with the influential individual (block 1504).

The address resolver 306 determines the geographic location by matching the communication identifier to a communication address prefix and cross-referencing the communication address prefix to the geographic location. For example, a communication identifier of 135.16.252.322 is matched by the address resolver 306 to the geographic region of California that includes an IP address prefix range from 220.0.0.0 to 160.0.0.0. The geographic location is narrowed by matching the IP address prefix to an IP address range of 132.0.0.0 to 136.0.0.0 corresponding to the Los Angeles area. The geographic location is further narrowed by matching the communication identifier to an IP address prefix of 135.16.0.0 for the zip code 90015. If the information in the geographic database 322 includes block and street address information, the geographic location may be further narrowed.

Upon determining the geographic location corresponding to the communication identifier, the address resolver 306 associates the geographic location with the influential individual (block 1406). Associating may include linking the geographic location to an electronic record including the individual and/or the communication identifier associated with the individual.

Upon associating the influential individual with the geographic location, the example method 1412 continues when the address resolver 306 accesses the demographic database 324 of FIG. 3 (block 1408). Then, the address resolver 306 determines a demographic composition and/or profile for the influential individual (block 1310). The demographic profile is determined by matching the geographic location associated with the communication identifier associated with the influential individual to a geographic location listed in the demographic database 324. Once there is a match between the geographic locations, the demographic profile associated with the matched geographic location is associated with the influential individual and the communication identifier (block 1412). For example, the address resolver 306 may access the demographic database 324 that includes a range of zips codes for a particular demographic profile. The address resolver 306 determines the zip code range that matches the 90015 zip code and associates the corresponding demographic profile with the communication identifier associated with the 90015 geographic location. Then, the address resolver 306 associates the demographic profile with the influential individual by storing the demographic information to a record including the media device and/or the geographic location. Alternatively, the demographic profile may be associated with the influential individual by tagging a group number identification number corresponding to the demographic profile and the geographic location to an electronic record.

The demographic profile for any geographic location may include an average demographic profile for a typical individual in a geographic location, an average of demographic information for a geographic area, a listing of demographic profiles for a geographic area, and/or a distribution of demographic information for a geographic area. The information included within a demographic profile may include race, ethnicity, education level, adjusted gross income per household, number of members per household, gender, population, etc. Once the demographic profile is associated with the media device, the example method 1412 ends.

FIG. 16 depicts in more detail the operations of block 1406 of FIG. 14. The methods depicted in FIG. 16 may be performed to implement the example collection system 202 and/or the influence processor 304 of FIG. 3. The example method 1406 may be executed at predetermined intervals, based on an occurrence of a predetermined event, in response to a user request, etc., or on any combination thereof. For example, the method 1406 may be executed at predetermined intervals, such as hourly, daily, etc. Additionally or alternatively, the example method 1406 may be executed upon the occurrence of a trigger generated remotely such as, for example, the influence processor receiving one or more communication records.

While the method 1406 shown in FIG. 16 involves one manner of identifying influential individuals, the example collection system 202 and/or the influence processor 304 may utilize any method for identifying influential individuals. The method 1406 begins when the influence processor 304 parses a communication record by communications initiated by a panel member and communications received by the panel member (block 1602). Next, for each communication parsed, the influence processor 304 determines if each communication was initiated by the panel member (block 1604). For the communications that were initiated by the panel member, the influence processor 304 compiles the communications (block 1606) and counts the number of communications (block 1608).

The influence processor 304 then determines if the number of communications exceeds a predefined threshold (block 1610). The predefined thresholds may be specified by the metering service. Additionally, the thresholds may be determined from any statistical metrics or formulas for calculating the number of communications and/or durations of communications necessary to classify a relationship as an influential consumer relationship. If the number of communications exceeds the threshold, the influence processor 304 classifies the influential individual associated with the communications as influenced by the panel member (block 1612).

The influence processor 304 then matches the number of communications to a relationship weight and assigns the weight to the influential consumer relationship between the individual and the panel member (block 1614). For example, 5 communications initiated by the panel member to the individual may correspond to a regular (e.g., nominal, average etc.) influential consumer relationship. However, 10 communications may correspond to a heavily influential consumer relationship. Upon assigning a weight to the influential consumer relationship between the influential individual and the panel member (block 1614), the example method 1406 ends. Additionally, if the number of communications does not exceed the threshold (block 1610), the example method 1406 ends.

For the communications initiated by the individual (block 1604), the influence processor 304 compiles the communications (block 1616) and counts the number of communications (block 1618). The influence processor 304 then determines if the number of communications exceeds a predefined threshold (block 1620). If the number of communications exceeds the threshold, the influence processor 304 classifies the influential individual associated with the communications as influential with the panel member (block 1622). The influence processor 304 then matches the number of communications to a relationship weight and assigns the weight to the influential consumer relationship between the individual and the panel member (block 1624). Upon assigning a weight to the influential consumer relationship between the influential individual and the panel member (block 1624), the example method 1406 ends. Additionally, if the number of communications does not exceed the threshold (block 1620), the example method 1406 ends.

FIG. 17 is a block diagram of an example computer system 1700 capable of implementing the systems and methods disclosed herein. The computer 1700 can be, for example, a server, a personal computer, a personal digital assistant (PDA), an internet appliance, a DVD player, a CD player, a digital video recorder, a personal video recorder, a set top box, or any other type of computing device. Any or all of the example collection system 202, the example metering component 214, the example address resolver 306, and/or the example influence processor 304 may be implemented by the example computer 1700.

The system 1700 of the illustrated example includes a processor 1712 such as a general purpose programmable processor. The processor 1712 includes a local memory 1714, and executes coded instructions 1716 present in the local memory 1714 and/or in another memory device. The coded instructions 1716 when executed, may perform some or all of the methods represented in FIGS. 11, 12, 13, 14, 15, and 16. The processor 1712 may be any type of processing unit, such as one or more microprocessors from the Intel® Centrino® family of microprocessors, the Intel® Pentium® family of microprocessors, the Intel® Itanium® family of microprocessors, the Intel® Core® family of microprocessors, and/or the Intel® XScale® family of processors. Of course, other processors from other families are also appropriate.

The processor 1712 is in communication with a main memory including a volatile memory 1718 and a non-volatile memory 1720 via a bus 1722. The volatile memory 1718 may be implemented by Static Random Access Memory (SRAM), Synchronous Dynamic Random Access Memory (SDRAM), Dynamic Random Access Memory (DRAM), RAMBUS Dynamic Random Access Memory (RDRAM) and/or any other type of random access memory device. The non-volatile memory 1720 may be implemented by flash memory and/or any other desired type of memory device. Access to the main memory 1718, 1720 is typically controlled by a memory controller.

The computer 1700 also includes an interface circuit 1724. The interface circuit 1724 may be implemented by any type of interface standard, such as an Ethernet interface, a universal serial bus (USB), and/or a third generation input/output (3GIO) interface.

One or more input devices 1726 are connected to the interface circuit 1724. The input device(s) 1726 permit a user to enter data and commands into the processor 1712. The input device(s) can be implemented by, for example, a keyboard, a mouse, a touchscreen, a track-pad, a trackball, an isopoint and/or a voice recognition system.

One or more output devices 1728 are also connected to the interface circuit 1724. The output devices 1728 can be implemented, for example, by display devices (e.g., a liquid crystal display, a cathode ray tube display (CRT)), by a printer and/or by speakers. The interface circuit 1724, thus, typically includes a graphics driver card.

The interface circuit 1724 also includes a communication device such as a modem or network interface card to facilitate exchange of data with external computers via a network (e.g., an Ethernet connection, a digital subscriber line (DSL), a telephone line, coaxial cable, a cellular telephone system, etc.).

The computer 1700 also includes one or more mass storage devices 1730 for storing software and data. Examples of such mass storage devices 1730 include floppy disk drives, hard drive disks, compact disk drives and digital versatile disk (DVD) drives. The mass storage devices 1730 may implement any or all of the example panel member database 320, the example relationship database 326, the example geographic database 322, and/or the example demographic database 324. Additionally or alternatively, the volatile memory 1718 may implement any or all of the example panel member database 320, the example relationship database 326, the example geographic database 322, and/or the example demographic database 324.

At least some of the above described example methods and/or system are implemented by one or more software and/or firmware programs running on a computer processor.
However, dedicated hardware implementations including, but not limited to, application specific integrated circuits, programmable logic arrays and other hardware devices can likewise be constructed to implement some or all of the example methods and/or apparatus described herein, either in whole or in part. Furthermore, alternative software implementations including, but not limited to, distributed processing or component/object distributed processing, parallel processing, or virtual machine processing can also be constructed to implement the example methods and/or apparatus described herein.

It should also be noted that the example software and/or firmware implementations described herein are stored on a tangible storage medium, such as: a magnetic medium (e.g., a magnetic disk or tape); a magneto-optical or optical medium such as an optical disk; or a solid state medium such as a memory card or other package that houses one or more read-only (non-volatile) memories, random access memories, or other re-writable (volatile) memories. A digital file attached to e-mail or other information archive or set of archives is considered a distribution medium equivalent to a tangible storage medium. Accordingly, the example software and/or firmware described herein can be stored on a tangible storage medium or distribution medium such as those described above or successor storage media.

To the extent the above specification describes example components and functions with reference to particular standards and protocols, it is understood that the scope of this patent is not limited to such standards and protocols. For instance, each of the standards for internet and other packet switched network transmission (e.g., Transmission Control Protocol (TCP)/Internet Protocol (IP), User Datagram Protocol (UDP)/IP, HyperText Markup Language (HTML), HyperText Transfer Protocol (HTTP)) represent examples of the current state of the art. Such standards are periodically superseded by faster or more efficient equivalents having the same general functionality. Accordingly, replacement standards and protocols having the same functions are equivalents which are contemplated by this patent and are intended to be included within the scope of the accompanying claims.

Additionally, although this patent discloses example systems including software or firmware executed on hardware, it should be noted that such systems are merely illustrative and should not be considered as limiting. For example, it is contemplated that any or all of these hardware and software components could be embodied exclusively in hardware, exclusively in software, exclusively in firmware or in some combination of hardware, firmware and/or software. Accordingly, while the above specification described example systems, methods and articles of manufacture, the examples are not the only way to implement such systems, methods and articles of manufacture. Therefore, although certain example methods, apparatus and articles of manufacture have been described herein, the scope of coverage of this patent is not limited thereto. On the contrary, this patent covers all methods, apparatus and articles of manufacture fairly falling within the scope of the appended claims either literally or under the doctrine of equivalents.

## Claims

1. A method to associate demographic and geographic information with influential consumer relationships, the method comprising:
receiving a communication record associated with a panel member;
identifying from the communication record an influential relationship between a first individual listed within the communication record and the panel member; and
in response to identifying the influential relationship, associating at least one of a geographic location or a demographic profile with the first individual.

2. A method as defined in claim 1, wherein at least one of the geographic location or the demographic profile is associated with the first individual by:
identifying a communication identifier associated with the first individual;
accessing geographic information and determining the geographic location for the first individual corresponding to the communication identifier; and
accessing demographic information and determining the demographic profile associated with the geographic location.

3. A method as defined in claim 1, wherein identifying the influential relationship comprises:
parsing the communication record by communications initiated by the panel member and communications received by the panel member;
counting a first number of communications associated with the panel member initiating communications with the first individual and counting a second number of communications associated with the panel member receiving communications from the first individual;
determining if the first number of communications exceeds a first threshold and determining if the second number of communications exceeds a second threshold;
if the first number of communications exceeds the first threshold, classifying the panel member as influential with the first individual; and
if the second number of communications exceeds the second threshold, classifying the first individual as influential with the panel member.

4. A method as defined in claim 1, further comprising:
determining if the influential relationship between the panel member and the first individual is similar to an influential relationship between a first set of individuals and a second set of individuals;
if the influential relationship is similar, adding the panel member to the first set of individuals and adding the first individual to the second set of individuals; and
if the influential relationship is not similar, creating a third set of individuals including the panel member and creating a fourth set of individuals including the first individual.

5. A method as defined in claim 4, wherein determining if the influential relationship between the panel member and the first individual is similar to an influential relationship between the first set of individuals and the second set of individuals comprises:
matching at least one of the demographic profile or the geographic location associated with the panel member to the first set of individuals;
matching at least one of the demographic profile or the geographic location associated with the first individual to the second set of individuals; and
matching the influential relationship between the panel member and the first individual to the influential relationship between the first set of individuals and the second set of individuals.

6. A method as defined in claim 5, further comprising if the influential relationship between the panel member and the first individual is similar to an influential relationship between the first set of individuals and the second set of individuals, generating a report showing the influential relationship between the first set of individuals including the panel member and the second set of individuals including the first individual.

7. A method as defined in claim 5, further comprising:
identifying from the communication record a second influential relationship between a second individual listed within the communication record and the panel member;
in response to identifying the second influential relationship, associating at least one of the geographic location or the demographic profile with the second individual;
determining if the second influential relationship between the panel member and the second individual is similar to an influential relationship between a fifth set of individuals and a sixth set of individuals;
if the second influential relationship is similar, adding the panel member to the fifth set of individuals and adding the second individual to the sixth set of individuals; and
if the second influential relationship is not similar, creating a seventh set of individuals including the panel member and creating a eighth set of individuals including the first individual.

8. A method as defined in claim 7, further comprising if the second influential relationship between the panel member and the second individual is similar, generating a report showing the second influential relationship between the fifth set of individuals including the panel member and the sixth set of individuals including the second individual.

9. A method as defined in claim 1, further comprising prior to receiving the communication record:
registering the panel member with a metering service to receive the communication record; and
storing at least one of a demographic profile or a geographic location associated with
the panel member.

10. An apparatus to associate demographic and geographic information with influential consumer relationships, the apparatus comprising:
an influence processor to identify from a communication record an influential relationship between a first individual listed within the communication record and a panel member; and
an address resolver to, in response to identifying the influential relationship, associate at least one of a geographic location or a demographic profile with the first individual.

11. An apparatus as defined in claim 10, wherein the address resolver is to:
identify a communication identifier associated with the first individual;
access geographic information and determine the geographic location for the first individual corresponding to the communication identifier; and
access demographic information and determine the demographic profile associated with the geographic location.

12. An apparatus as defined in claim 10, wherein the influence processor is to identify the influential relationship by:
parsing the communication record by communications initiated by the panel member and communications received by the panel member;
counting a first number of communications associated with the panel member initiating communications with the first individual and counting a second number of communications associated with the panel member receiving communications from the first individual;
determining if the first number of communications exceeds a first threshold and determining if the second number of communications exceeds a second threshold;
if the first number of communications exceeds the first threshold, classifying the panel member as influential with the first individual; and
if the second number of communications exceeds the second threshold, classifying the first individual as influential with the panel member.

13. An apparatus as defined in claim 10, further comprising a report generator to:
determine if the influential relationship between the panel member and the first individual is similar to an influential relationship between a first set of individuals and a second set of individuals;
if the influential relationship is similar, add the panel member to the first set of individuals and add the first individual to the second set of individuals; and
if the influential relationship is not similar, create a third set of individuals including the panel member and create a fourth set of individuals including the first individual.

14. An apparatus as defined in claim 13, wherein the report generator is to determine if the influential relationship between the panel member and the first individual is similar to an influential relationship between the first set of individuals and the second set of individuals by:
matching at least one of the demographic profile or the geographic location associated with the panel member to the first set of individuals;
matching at least one of the demographic profile or the geographic location associated with the first individual to the second set of individuals; and
matching the influential relationship between the panel member and the first individual to the influential relationship between the first set of individuals and the second set of individuals.

15. A machine-accessible medium having instructions stored thereon that, when executed, cause a machine to:
receive a communication record associated with a panel member;
identify from the communication record an influential relationship between a first individual listed within the communication record and the panel member; and
in response to identifying the influential relationship, associate at least one of a geographic location or a demographic profile with the first individual.
